# EUROPEAN PATENT APPLICATION

(11) **EP 4 811 755 A1**
(43) Date of publication of application: **23.09.2026**
(21) Application number: 24915435.2
(22) Date of filing: 27.12.2024
(51) Int. Cl.: H04M 1/02, H01Q 1/24, H01Q 13/10

(54) **ELECTRONIC DEVICE COMPRISING CONDUCTIVE MEMBER HAVING SLOT AND RECESS IN ORDER TO OPERATE AS ANTENNA**

(30) Priority: 02.01.2024 KR 20240000586; 08.03.2024 KR 20240033505; 17.05.2024 KR 20240064833
(71) Applicant: Samsung Electronics Co., Ltd., Suwon-si, Gyeonggi-do 16677 (KR)
(72) Inventor: LEE, Heejun, Suwon-si Gyeonggi-do 16677 (KR); PARK, Gyubok, Suwon-si Gyeonggi-do 16677 (KR); CHO, Youngjun, Suwon-si Gyeonggi-do 16677 (KR); KIM, Seunghwan, Suwon-si Gyeonggi-do 16677 (KR); SEO, Mincheol, Suwon-si Gyeonggi-do 16677 (KR)
(74) Representative: HGF
(86) International application number: PCT/KR2024/021285
(87) International publication number: WO 2025/147023

(57) **Abstract**

An electronic device according to one embodiment may comprise: a display; a rear cover; a side member including a first conductive part that forms a portion of a side surface of the electronic device; and a support member, which is arranged between the display and the rear cover and includes a planar part and a recess part. The recess part can include a second conductive part, which is recessed toward the rear cover with respect to the planar part and extends toward the side surface. The second conductive part of the recess part can form, together with the first conductive part, a slot area that substantially faces the display. The electronic device may comprise a communication circuit for transmitting or receiving a wireless signal through the slot area.

## Description

### [Technical Field]

The present disclosure relates to an electronic device including a conductive member in which a slot and a recess are formed for operating as an antenna.

### [Background Art]

An electronic device such as a smartphone may include an antenna for wireless communication. For example, the electronic device may include a display and a housing accommodating the display, and the housing may include a conductive portion at least partially operating as the antenna.

The above-described information may be provided as a related art for the purpose of helping understanding of the present disclosure. No argument or decision is made as to whether any of the above description may be applied as a prior art related to the present disclosure.

### [Disclosure]

### [Technical Solution]

According to an embodiment, an electronic device may include a display, a rear cover, a side member including a first conductive portion forming a part of a side surface of the electronic device, and a support member disposed between the display and the rear cover and including a planar portion and a recess portion. The recess portion may include a second conductive portion recessed toward the rear cover relative to the planar portion and extending toward the side surface. The second conductive portion of the recess portion may be configured to form, together with the first conductive portion, a slot region substantially facing the display. The electronic device may include a communication circuit configured to transmit or receive a wireless signal through the slot region.

According to an embodiment, an electronic device may comprise a display and a conductive support member supporting the display. The conductive support member may include a sidewall portion adjacent to a side surface of the electronic device, a planar portion, and a recess portion. The recess portion may be configured to form, together with the sidewall portion, a slot region substantially facing the display by being recessed toward a rear surface of the electronic device relative to the planar portion and extend toward the side surface of the electronic device. The electronic device may include a communication circuit configured to transmit and receive a wireless signal through the slot region.

According to an embodiment, an electronic device may comprise a display visible through a front surface of the electronic device, a housing comprising a first conductive portion forming a part of a side surface of the electronic device and a second conductive portion positioned below the display and at least partially separated from the first conductive portion by a slot, and a wireless communication circuit configured to transmit and receive a radio frequency (RF) signal through the slot. The second conductive portion may comprise a first part and a second part forming a part of an edge of the slot. The second part of the second conductive portion may define a recess that is open toward the first conductive portion to be connected to the slot and is recessed toward a rear surface of the electronic device such that the second part is spaced further from the display than the first part.

### [Description of the Drawings]

FIG. 1 is a block diagram of an electronic device in a network environment according to various embodiments.
FIG. 2A is a diagram illustrating an exemplary electronic device according to an embodiment.
FIG. 2B is an exploded perspective view of an exemplary electronic device according to an embodiment.
FIG. 3A is a diagram illustrating a frame structure of an electronic device according to an embodiment.
FIG. 3B is diagrams illustrating a frame structure of an electronic device according to an embodiment.
FIG. 3C is diagrams illustrating a frame structure of an electronic device according to an embodiment.
FIG. 3D is diagrams illustrating a frame structure of an electronic device according to an embodiment.
FIG. 4A is a cross-sectional view of an electronic device according to an embodiment.
FIG. 4B is a cross-sectional view of an electronic device according to an embodiment.
FIG. 5 is a diagram illustrating an antenna region of an electronic device according to an embodiment.
FIG. 6A illustrates a frame structure, a printed circuit board, and a connection member of an electronic device according to an embodiment.
FIG. 6B is a cross-sectional view taken along line C-C' of FIG. 6A.
FIG. 6C is a cross-sectional view taken along line D-D' of FIG. 6A.
FIG. 7A is a diagram illustrating a distribution of an electric field of an electronic device according to a comparative example and an electronic device according to an embodiment.
FIG. 7B illustrates a radiation pattern of an electronic device according to an embodiment.
FIG. 7C is a graph illustrating antenna efficiency of an electronic device according to a comparative example and an electronic device according to an embodiment.
FIG. 8A illustrates antenna efficiency according to a height of a recess of an electronic device according to an embodiment.
FIG. 8B illustrates antenna efficiency according to a length of a recess of an electronic device according to an embodiment.
FIG. 9A illustrates examples of an electronic device including a slot.
FIG. 9B is a graph illustrating antenna efficiency according to the examples of FIG. 9A.
FIG. 9C is a graph illustrating antenna efficiency according to the examples of FIG. 9A.
FIG. 9D is a graph illustrating antenna efficiency according to the examples of FIG. 9A.
FIG. 9E is a graph illustrating antenna efficiency according to the examples of FIG. 9A.
FIG. 10A illustrates examples of an electronic device including a slot.
FIG. 10B is a graph illustrating antenna efficiency according to the examples of FIG. 10A.
FIG. 10C is a graph illustrating antenna efficiency according to the examples of FIG. 10A.
FIG. 10D is a graph illustrating antenna efficiency according to the examples of FIG. 10A.
FIG. 10E is a graph illustrating antenna efficiency according to the examples of FIG. 10A.
FIG. 11A illustrates examples of an electronic device having slots of various lengths.
FIG. 11B is a graph illustrating antenna efficiency according to the examples of FIG. 11A.
FIG. 11C is a graph illustrating antenna efficiency according to the examples of FIG. 11A.
FIG. 11D is a graph illustrating antenna efficiency according to the examples of FIG. 11A.
FIG. 11E is a graph illustrating antenna efficiency according to the examples of FIG. 11A.
FIG. 12A is a graph illustrating antenna efficiency according to a length of a recess.
FIG. 12B is a graph illustrating antenna efficiency according to a length of a recess.
FIG. 12C is a graph illustrating antenna efficiency according to a length of a recess.
FIG. 12D is a graph illustrating antenna efficiency according to a length of a recess.
FIG. 13A illustrates examples of an electronic device having slots of various heights.
FIG. 13B is a graph illustrating antenna efficiency according to the examples of FIG. 13A.
FIG. 13C is a graph illustrating antenna efficiency according to the examples of FIG. 13A.
FIG. 13D is a graph illustrating antenna efficiency according to the examples of FIG. 13A.
FIG. 13E is a graph illustrating antenna efficiency according to the examples of FIG. 13A.
FIG. 14 illustrates examples of a position of a recess according to an embodiment.
FIG. 15A illustrates various examples of a frame structure of an electronic device in which a recess and a slot are formed, according to an embodiment.
FIG. 15B illustrates various examples of a frame structure of an electronic device in which a recess and a slot are formed, according to an embodiment.
FIG. 15C illustrates various examples of a frame structure of an electronic device in which a recess and a slot are formed, according to an embodiment.
FIG. 15D illustrates various examples of a frame structure of an electronic device in which a recess and a slot are formed, according to an embodiment.
FIG. 15E illustrates various examples of a frame structure of an electronic device in which a recess and a slot are formed, according to an embodiment.

### [Mode for Invention]

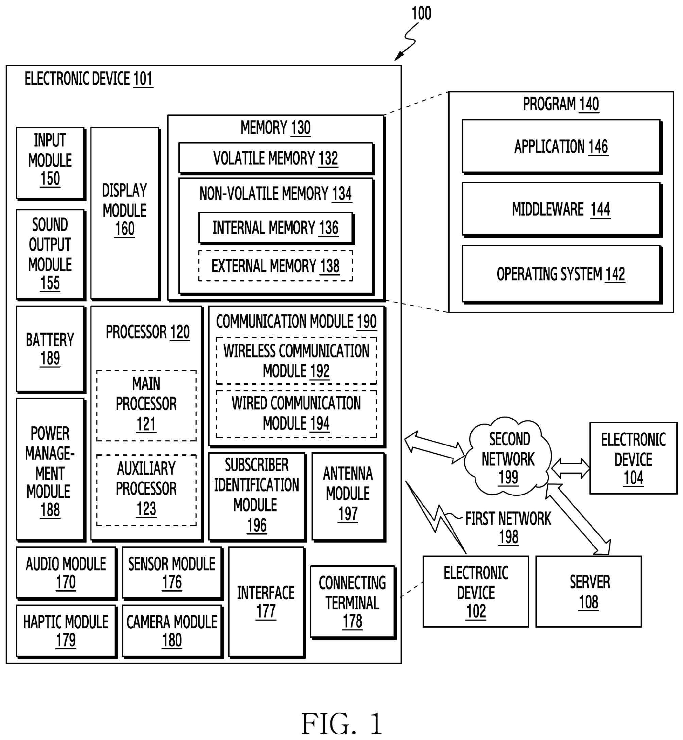

FIG. 1 is a block diagram illustrating an electronic device 101 in a network environment 100 according to various embodiments. Referring to FIG. 1, the electronic device 101 in the network environment 100 may communicate with an electronic device 102 via a first network 198 (e.g., a short-range wireless communication network), or at least one of an electronic device 104 or a server 108 via a second network 199 (e.g., a long-range wireless communication network). According to an embodiment, the electronic device 101 may communicate with the electronic device 104 via the server 108. According to an embodiment, the electronic device 101 may include a processor 120, memory 130, an input module 150, a sound output module 155, a display module 160, an audio module 170, a sensor module 176, an interface 177, a connecting terminal 178, a haptic module 179, a camera module 180, a power management module 188, a battery 189, a communication module 190, a subscriber identification module (SIM) 196, or an antenna module 197. In some embodiments, at least one of the components (e.g., the connecting terminal 178) may be omitted from the electronic device 101, or one or more other components may be added in the electronic device 101. In some embodiments, some of the components (e.g., the sensor module 176, the camera module 180, or the antenna module 197) may be implemented as a single component (e.g., the display module 160).

The processor 120 may execute, for example, software (e.g., a program 140) to control at least one other component (e.g., a hardware or software component) of the electronic device 101 coupled with the processor 120, and may perform various data processing or computation. According to an embodiment, as at least part of the data processing or computation, the processor 120 may store a command or data received from another component (e.g., the sensor module 176 or the communication module 190) in volatile memory 132, process the command or the data stored in the volatile memory 132, and store resulting data in non-volatile memory 134. According to an embodiment, the processor 120 may include a main processor 121 (e.g., a central processing unit (CPU) or an application processor (AP)), or an auxiliary processor 123 (e.g., a graphics processing unit (GPU), a neural processing unit (NPU), an image signal processor (ISP), a sensor hub processor, or a communication processor (CP)) that is operable independently from, or in conjunction with, the main processor 121. For example, when the electronic device 101 includes the main processor 121 and the auxiliary processor 123, the auxiliary processor 123 may be adapted to consume less power than the main processor 121, or to be specific to a specified function. The auxiliary processor 123 may be implemented as separate from, or as part of the main processor 121.

The auxiliary processor 123 may control at least some of functions or states related to at least one component (e.g., the display module 160, the sensor module 176, or the communication module 190) among the components of the electronic device 101, instead of the main processor 121 while the main processor 121 is in an inactive (e.g., sleep) state, or together with the main processor 121 while the main processor 121 is in an active state (e.g., executing an application). According to an embodiment, the auxiliary processor 123 (e.g., an image signal processor or a communication processor) may be implemented as part of another component (e.g., the camera module 180 or the communication module 190) functionally related to the auxiliary processor 123. According to an embodiment, the auxiliary processor 123 (e.g., the neural processing unit) may include a hardware structure specified for artificial intelligence model processing. An artificial intelligence model may be generated by machine learning. Such learning may be performed, e.g., by the electronic device 101 where the artificial intelligence is performed or via a separate server (e.g., the server 108). Learning algorithms may include, but are not limited to, e.g., supervised learning, unsupervised learning, semi-supervised learning, or reinforcement learning. The artificial intelligence model may include a plurality of artificial neural network layers. The artificial neural network may be a deep neural network (DNN), a convolutional neural network (CNN), a recurrent neural network (RNN), a restricted Boltzmann machine (RBM), a deep belief network (DBN), a bidirectional recurrent deep neural network (BRDNN), deep Q-network or a combination of two or more thereof but is not limited thereto. The artificial intelligence model may, additionally or alternatively, include a software structure other than the hardware structure.

The memory 130 may store various data used by at least one component (e.g., the processor 120 or the sensor module 176) of the electronic device 101. The various data may include, for example, software (e.g., the program 140) and input data or output data for a command related thereto. The memory 130 may include the volatile memory 132 or the non-volatile memory 134.

The program 140 may be stored in the memory 130 as software, and may include, for example, an operating system (OS) 142, middleware 144, or an application 146.

The input module 150 may receive a command or data to be used by another component (e.g., the processor 120) of the electronic device 101, from the outside (e.g., a user) of the electronic device 101. The input module 150 may include, for example, a microphone, a mouse, a keyboard, a key (e.g., a button), or a digital pen (e.g., a stylus pen).

The sound output module 155 may output sound signals to the outside of the electronic device 101. The sound output module 155 may include, for example, a speaker or a receiver. The speaker may be used for general purposes, such as playing multimedia or playing record. The receiver may be used for receiving incoming calls. According to an embodiment, the receiver may be implemented as separate from, or as part of the speaker.

The display module 160 may visually provide information to the outside (e.g., a user) of the electronic device 101. The display module 160 may include, for example, a display, a hologram device, or a projector and control circuitry to control a corresponding one of the display, hologram device, and projector. According to an embodiment, the display module 160 may include a touch sensor adapted to detect a touch, or a pressure sensor adapted to measure the intensity of force incurred by the touch.

The audio module 170 may convert a sound into an electrical signal and vice versa. According to an embodiment, the audio module 170 may obtain the sound via the input module 150, or output the sound via the sound output module 155 or a headphone of an external electronic device (e.g., an electronic device 102) directly (e.g., wiredly) or wirelessly coupled with the electronic device 101.

The sensor module 176 may detect an operational state (e.g., power or temperature) of the electronic device 101 or an environmental state (e.g., a state of a user) external to the electronic device 101, and then generate an electrical signal or data value corresponding to the detected state. According to an embodiment, the sensor module 176 may include, for example, a gesture sensor, a gyro sensor, an atmospheric pressure sensor, a magnetic sensor, an acceleration sensor, a grip sensor, a proximity sensor, a color sensor, an infrared (IR) sensor, a biometric sensor, a temperature sensor, a humidity sensor, or an illuminance sensor.

The interface 177 may support one or more specified protocols to be used for the electronic device 101 to be coupled with the external electronic device (e.g., the electronic device 102) directly (e.g., wiredly) or wirelessly. According to an embodiment, the interface 177 may include, for example, a high definition multimedia interface (HDMI), a universal serial bus (USB) interface, a secure digital (SD) card interface, or an audio interface.

A connecting terminal 178 may include a connector via which the electronic device 101 may be physically connected with the external electronic device (e.g., the electronic device 102). According to an embodiment, the connecting terminal 178 may include, for example, an HDMI connector, a USB connector, an SD card connector, or an audio connector (e.g., a headphone connector).

The haptic module 179 may convert an electrical signal into a mechanical stimulus (e.g., a vibration or a movement) or electrical stimulus which may be recognized by a user via his tactile sensation or kinesthetic sensation. According to an embodiment, the haptic module 179 may include, for example, a motor, a piezoelectric element, or an electric stimulator.

The camera module 180 may capture a still image or moving images. According to an embodiment, the camera module 180 may include one or more lenses, image sensors, image signal processors, or flashes.

The power management module 188 may manage power supplied to the electronic device 101. According to an embodiment, the power management module 188 may be implemented as at least part of, for example, a power management integrated circuit (PMIC).

The battery 189 may supply power to at least one component of the electronic device 101. According to an embodiment, the battery 189 may include, for example, a primary cell which is not rechargeable, a secondary cell which is rechargeable, or a fuel cell.

The communication module 190 may support establishing a direct (e.g., wired) communication channel or a wireless communication channel between the electronic device 101 and the external electronic device (e.g., the electronic device 102, the electronic device 104, or the server 108) and performing communication via the established communication channel. The communication module 190 may include one or more communication processors that are operable independently from the processor 120 (e.g., the application processor (AP)) and supports a direct (e.g., wired) communication or a wireless communication. According to an embodiment, the communication module 190 may include a wireless communication module 192 (e.g., a cellular communication module, a short-range wireless communication module, or a global navigation satellite system (GNSS) communication module) or a wired communication module 194 (e.g., a local area network (LAN) communication module or a power line communication (PLC) module). A corresponding one of these communication modules may communicate with the external electronic device via the first network 198 (e.g., a short-range communication network, such as Bluetooth^{™}, wireless-fidelity (Wi-Fi) direct, or infrared data association (IrDA)) or the second network 199 (e.g., a long-range communication network, such as a legacy cellular network, a 5G network, a next-generation communication network, the Internet, or a computer network (e.g., LAN or wide area network (WAN)). These various types of communication modules may be implemented as a single component (e.g., a single chip), or may be implemented as multi components (e.g., multi chips) separate from each other. The wireless communication module 192 may identify and authenticate the electronic device 101 in a communication network, such as the first network 198 or the second network 199, using subscriber information (e.g., international mobile subscriber identity (IMSI)) stored in the subscriber identification module 196.

The wireless communication module 192 may support a 5G network, after a 4G network, and next-generation communication technology, e.g., new radio (NR) access technology. The NR access technology may support enhanced mobile broadband (eMBB), massive machine type communications (mMTC), or ultra-reliable and low-latency communications (URLLC). The wireless communication module 192 may support a high-frequency band (e.g., the mmWave band) to achieve, e.g., a high data transmission rate. The wireless communication module 192 may support various technologies for securing performance on a high-frequency band, such as, e.g., beamforming, massive multiple-input and multiple-output (massive MIMO), full dimensional MIMO (FD-MIMO), array antenna, analog beam-forming, or large scale antenna. The wireless communication module 192 may support various requirements specified in the electronic device 101, an external electronic device (e.g., the electronic device 104), or a network system (e.g., the second network 199). According to an embodiment, the wireless communication module 192 may support a peak data rate (e.g., 20Gbps or more) for implementing eMBB, loss coverage (e.g., 164dB or less) for implementing mMTC, or U-plane latency (e.g., 0.5ms or less for each of downlink (DL) and uplink (UL), or a round trip of 1ms or less) for implementing URLLC.

The antenna module 197 may transmit or receive a signal or power to or from the outside (e.g., the external electronic device) of the electronic device 101. According to an embodiment, the antenna module 197 may include an antenna including a radiating element composed of a conductive material or a conductive pattern formed in or on a substrate (e.g., a printed circuit board (PCB)). According to an embodiment, the antenna module 197 may include a plurality of antennas (e.g., array antennas). In such a case, at least one antenna appropriate for a communication scheme used in the communication network, such as the first network 198 or the second network 199, may be selected, for example, by the communication module 190 (e.g., the wireless communication module 192) from the plurality of antennas. The signal or the power may then be transmitted or received between the communication module 190 and the external electronic device via the selected at least one antenna. According to an embodiment, another component (e.g., a radio frequency integrated circuit (RFIC)) other than the radiating element may be additionally formed as part of the antenna module 197.

According to various embodiments, the antenna module 197 may form a mmWave antenna module. According to an embodiment, the mmWave antenna module may include a printed circuit board, an RFIC disposed on a first surface (e.g., the bottom surface) of the printed circuit board, or adjacent to the first surface and capable of supporting a designated high-frequency band (e.g., the mmWave band), and a plurality of antennas (e.g., array antennas) disposed on a second surface (e.g., the top or a side surface) of the printed circuit board, or adjacent to the second surface and capable of transmitting or receiving signals of the designated high-frequency band.

At least some of the above-described components may be coupled mutually and communicate signals (e.g., commands or data) therebetween via an inter-peripheral communication scheme (e.g., a bus, general purpose input and output (GPIO), serial peripheral interface (SPI), or mobile industry processor interface (MIPI)).

According to an embodiment, commands or data may be transmitted or received between the electronic device 101 and the external electronic device 104 via the server 108 coupled with the second network 199. Each of the electronic devices 102 or 104 may be a device of a same type as, or a different type, from the electronic device 101. According to an embodiment, all or some of operations to be executed at the electronic device 101 may be executed at one or more of the external electronic devices 102, 104, or 108. For example, if the electronic device 101 should perform a function or a service automatically, or in response to a request from a user or another device, the electronic device 101, instead of, or in addition to, executing the function or the service, may request the one or more external electronic devices to perform at least part of the function or the service. The one or more external electronic devices receiving the request may perform the at least part of the function or the service requested, or an additional function or an additional service related to the request, and transfer an outcome of the performing to the electronic device 101. The electronic device 101 may provide the outcome, with or without further processing of the outcome, as at least part of a reply to the request. To that end, a cloud computing, distributed computing, mobile edge computing (MEC), or client-server computing technology may be used, for example. The electronic device 101 may provide ultra low-latency services using, e.g., distributed computing or mobile edge computing. In another embodiment, the external electronic device 104 may include an internet-of-things (IoT) device. The server 108 may be an intelligent server using machine learning and/or a neural network. According to an embodiment, the external electronic device 104 or the server 108 may be included in the second network 199. The electronic device 101 may be applied to intelligent services (e.g., smart home, smart city, smart car, or healthcare) based on 5G communication technology or IoT-related technology.

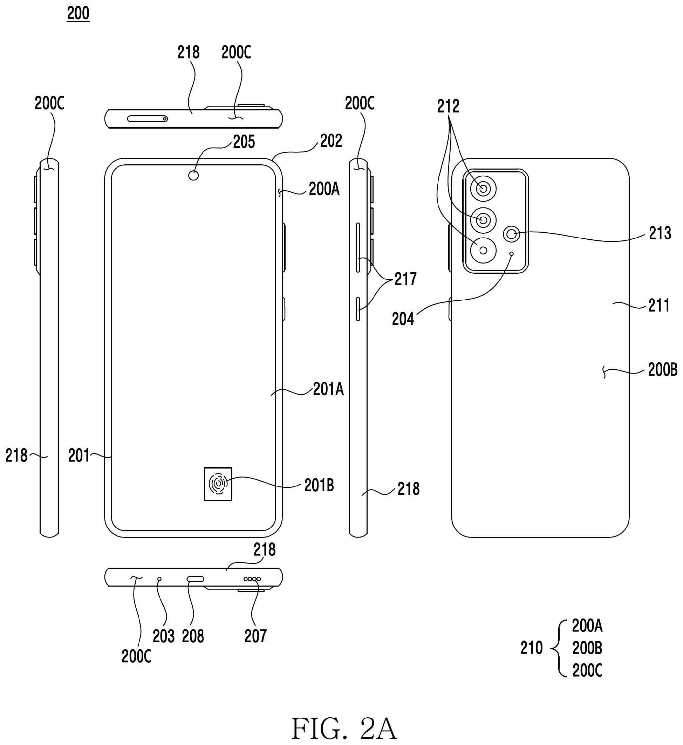

FIG. 2A is a diagram illustrating an exemplary electronic device according to an embodiment. Referring to FIG. 2A, an electronic device 200 according to an embodiment may include a housing 210 forming an exterior of the electronic device 200. For example, the housing 210 may include a first surface (or a front surface) 200A, a second surface (or a rear surface) 200B, and a third surface (or a side surface) 200C surrounding a space between the first surface 200A and the second surface 200B. In an embodiment, the housing 210 may refer to a structure forming at least a part of the first surface 200A, the second surface 200B, and/or the third surface 200C.

The electronic device 200 according to an embodiment may include a substantially transparent front plate 202. In an embodiment, the front plate 202 may form at least a part of the first surface 200A. In an embodiment, the front plate 202 may include, for example, a glass plate or a polymer plate including various coating layers, but is not limited thereto.

The electronic device 200 according to an embodiment may include a substantially opaque rear plate 211. In an embodiment, the rear plate 211 may form at least a part of the second surface 200B. In an embodiment, the rear plate 211 may be formed by coated or colored glass, ceramic, polymer, metal (e.g., aluminum, stainless steel (STS), or magnesium), or a combination of at least two of the above materials.

The electronic device 200 according to an embodiment may include a side bezel structure (e.g., a side member or a bracket) 218. In an embodiment, the side bezel structure 218 may form at least a part of the third surface 200C of the electronic device 200 by being coupled to the front plate 202 and/or the rear plate 211. For example, the side bezel structure 218 may form an entirety of the third surface 200C of the electronic device 200, or, for another example, the side bezel structure 218 may form the third surface 200C of the electronic device 200 together with the front plate 202 and/or the rear plate 211.

Unlike the illustrated embodiment, when the third surface 200C of the electronic device 200 is partially formed by the front plate 202 and/or the rear plate 211, the front plate 202 and/or the rear plate 211 may include a portion bent and extended toward the rear plate 211 and/or the front plate 202 at an edge thereof. The extended portion of the front plate 202 and/or the rear plate 211 may be positioned, for example, at both ends of a long edge of the electronic device 200, but is not limited by the above-described example.

In an embodiment, the side bezel structure 218 may include metal and/or polymer. In an embodiment, the rear plate 211 and the side bezel structure 218 may be integrally formed and may include the same material (e.g., a metal material such as aluminum), but are not limited thereto. For example, the rear plate 211 and the side bezel structure 218 may be formed as separate configurations and/or may include materials different from each other.

In an embodiment, the electronic device 200 may include a display 201 (e.g., the display module 160 of FIG. 1), audio modules 203, 204, and 207 (e.g., the audio module 170 of FIG. 1), a sensor module (e.g., the sensor module 176 of FIG. 1), camera modules 205, 212, and 213 (e.g., the camera module 180 of FIG. 1), a key input device 217 (e.g., the input module 150 of FIG. 1), a light emitting element (not illustrated), and a connector hole 208. In an embodiment, the electronic device 200 may omit at least one of the above components (e.g., the key input device 217 or the light emitting element (not illustrated)), or may additionally include another component.

In an embodiment, the display 201 may be visually exposed through a significant portion of the front plate 202. For example, at least a part of the display 201 may be visible through the front plate 202 forming the first surface 200A. The display 201 may be disposed on a back surface of the front plate 202.

In an embodiment, in order to expand an area in which the display 201 is visually exposed, an outer shape of the display 201 may be formed to be substantially the same as an outer shape of the front plate 202 adjacent to the display 201. In an embodiment, a gap between an outer edge of the display 201 and an outer edge of the front plate 202 may be formed to be substantially the same.

In an embodiment, the display 201 (or the first surface 200A of the electronic device 200) may include a screen display region 201A. In an embodiment, the display 201 may provide visual information to a user through the screen display region 201A. In the illustrated embodiment, when the first surface 200A is viewed from the front, the screen display region 201A is illustrated as being positioned inside the first surface 200A by being spaced apart from an outer edge of the first surface 200A, but is not limited thereto. For example, when the first surface 200A is viewed from the front, at least a part of an edge of the screen display region 201A may substantially coincide with an edge of the first surface 200A (or the front plate 202).

In an embodiment, the screen display region 201A may include a sensing region 201B configured to obtain biometric information of the user. Herein, a meaning of "the screen display region 201A includes the sensing region 201B" may be understood as that at least a part of the sensing region 201B may be overlapped with the screen display region 201A. For example, the sensing region 201B may mean a region that may display visual information by the display 201 like another region of the screen display region 201A and may additionally obtain biometric information (e.g., a fingerprint) of the user. Although the sensing region 201B is illustrated as being formed in the screen display region 201A, it is not limited thereto. For example, the sensing region 201B may be formed in the key input device 217.

In an embodiment, the display 201 may include a region in which a first camera module 205 is positioned. For example, an opening may be formed in the region of the display 201, and the first camera module 205 (e.g., a punch hole camera) may be at least partially disposed in the opening to face the first surface 200A. In this case, the screen display region 201A may surround at least a part of an edge of the opening. In an embodiment, the first camera module 205 (e.g., an under display camera (UDC)) may be disposed below the display 201 so as to overlap the region of the display 201. In this case, the display 201 may provide visual information to the user through the region, and additionally, the first camera module 205 may obtain an image corresponding to a direction toward the first surface 200A through the region of the display 201.

In an embodiment, the display 201 may be coupled with or disposed adjacent to a touch sensing circuit, a pressure sensor capable of measuring an intensity (pressure) of a touch, and/or a digitizer detecting a magnetic field type stylus pen.

In an embodiment, the audio modules 203, 204, and 207 may include microphone holes 203 and 204 and a speaker hole 207.

In an embodiment, the microphone holes 203 and 204 may include a first microphone hole 203 formed in a partial region of the third surface 200C and a second microphone hole 204 formed in a partial region of the second surface 200B. A microphone (not illustrated) for obtaining an external sound may be disposed inside the microphone holes 203 and 204. The microphone may include a plurality of microphones to detect a direction of sound, but is not limited thereto.

In an embodiment, the second microphone hole 204 formed in the partial region of the second surface 200B may be disposed adjacent to the camera modules 205, 212, and 213. For example, the second microphone hole 204 may obtain sound according to an operation of the camera modules 205, 212, and 213. However, it is not limited thereto.

In an embodiment, the speaker hole 207 may include an external speaker hole 207 and a receiver hole for calling (not illustrated). The external speaker hole 207 may be formed in a part of the third surface 200C of the electronic device 200. In an embodiment, the external speaker hole 207 may be integrated with the microphone hole 203, and the speaker hole 207 and the microphone hole 203 may be implemented as one hole. Although not illustrated, the receiver hole for calling (not illustrated) may be formed in another part of the third surface 200C. For example, the receiver hole for calling may be formed on an opposite side of the external speaker hole 207 in the third surface 200C. For example, based on the illustration of FIG. 2A, the external speaker hole 207 may be formed on the third surface 200C corresponding to a lower end part of the electronic device 200, and the receiver hole for calling may be formed in the third surface 200C corresponding to an upper end part of the electronic device 200. However, it is not limited thereto, and in another embodiment, the receiver hole for calling may be formed at a position other than the third surface 200C. For example, the receiver hole for calling may be formed by a space spaced apart between the front plate 202 (or the display 201) and the side bezel structure 218.

In an embodiment, the electronic device 200 may include at least one speaker (not illustrated) (e.g., the sound output module 155 of FIG. 1) configured to output sound to the outside of the housing 210 through the external speaker hole 207 and/or the receiver hole for calling (not illustrated).

In an embodiment, the sensor module (not illustrated) may generate an electrical signal or a data value corresponding to an operating state inside the electronic device 200 or an environment state of the outside. For example, the sensor module may include at least one of a proximity sensor, an HRM sensor, a fingerprint sensor, a gesture sensor, a gyro sensor, a barometric pressure sensor, a magnetic sensor, an acceleration sensor, a grip sensor, a color sensor, an infrared (IR) sensor, a biometric sensor, a temperature sensor, a humidity sensor, or an illuminance sensor.

In an embodiment, the camera modules 205, 212, and 213 may include the first camera module 205 disposed to face the first surface 200A of the electronic device 200, a second camera module 212 disposed to face the second surface 200B, and a flash 213.

In an embodiment, the second camera module 212 may include a plurality of cameras (e.g., a dual camera, a triple camera, or a quad camera). However, the second camera module 212 is not necessarily limited to including a plurality of cameras, and may include one camera.

In an embodiment, the first camera module 205 and the second camera module 212 may include one or a plurality of lenses, an image sensor, and/or an image signal processor.

In an embodiment, the flash 213 may include, for example, a light emitting diode or a xenon lamp. In an embodiment, two or more lenses (an infrared camera, a wide-angle and telephoto lens) and image sensors may be disposed on a surface of the electronic device 200.

In an embodiment, the key input device 217 may be disposed on the third surface 200C of the electronic device 200. In an embodiment, the electronic device 200 may not include a part or all of the key input device 217, and the key input device 217 not included may be implemented in another form such as a soft key on the display 201.

In an embodiment, the connector hole 208 may be formed on the third surface 200C of the electronic device 200 such that a connector of an external device may be accommodated. A connection terminal (e.g., the connection terminal 178 of FIG. 1) electrically connected to the connector of the external device may be disposed in the connector hole 208. The electronic device 200 according to an embodiment may include an interface module (e.g., the interface 177 of FIG. 1) for processing an electrical signal transmitted and received through the connection terminal.

In an embodiment, the electronic device 200 may include a light emitting element (not illustrated). For example, the light emitting element (not illustrated) may be disposed on the first surface 200A of the housing 210. The light emitting element (not illustrated) may provide state information of the electronic device 200 in a form of light. In an embodiment, the light emitting element (not illustrated) may provide a light source linked with an operation of the first camera module 205. For example, the light emitting element (not illustrated) may include an LED, an IR LED, and/or a xenon lamp.

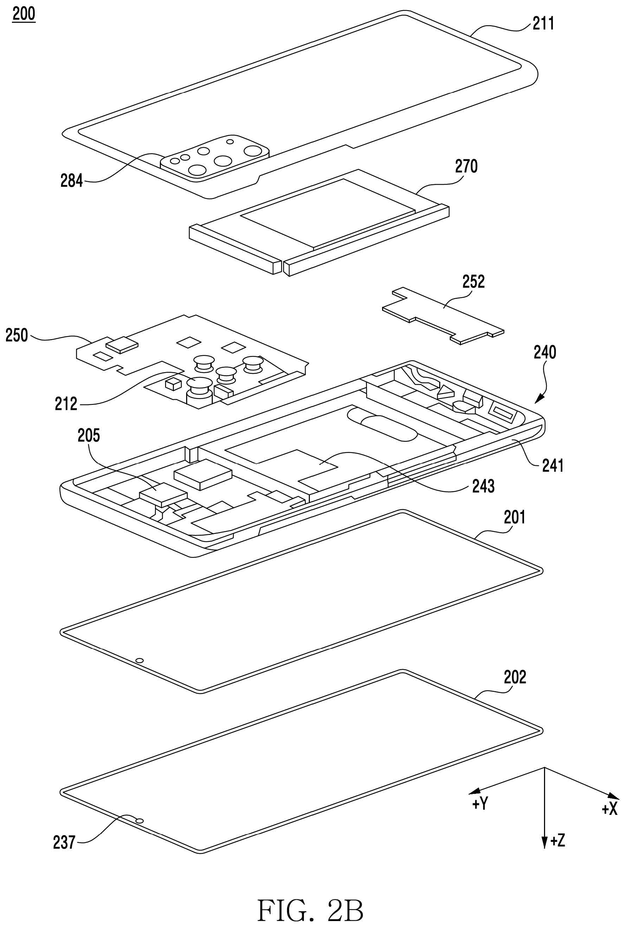

FIG. 2B is an exploded perspective view of an exemplary electronic device according to an embodiment. Referring to FIG. 2B, an electronic device 200 according to an embodiment may include a frame structure 240 (e.g., the side bezel structure 218 of FIG. 2A), a first printed circuit board 250, a second printed circuit board 252, and a battery 270 (e.g., the battery 189 of FIG. 1).

In an embodiment, the frame structure 240 may be positioned between a display 201 and a rear plate 211. In an embodiment, the frame structure 240 may support or accommodate components included in the electronic device 200. For example, the display 201 may be disposed on a surface of the frame structure 240 facing a direction (e.g., a +Z direction). The first printed circuit board 250, the second printed circuit board 252, the battery 270, and a second camera module 212 may be disposed on another surface of the frame structure 240 facing an opposite direction (e.g., a -Z direction) to the direction. The first printed circuit board 250, the second printed circuit board 252, the battery 270, and the second camera module 212 may be disposed in a recess formed in the frame structure 240.

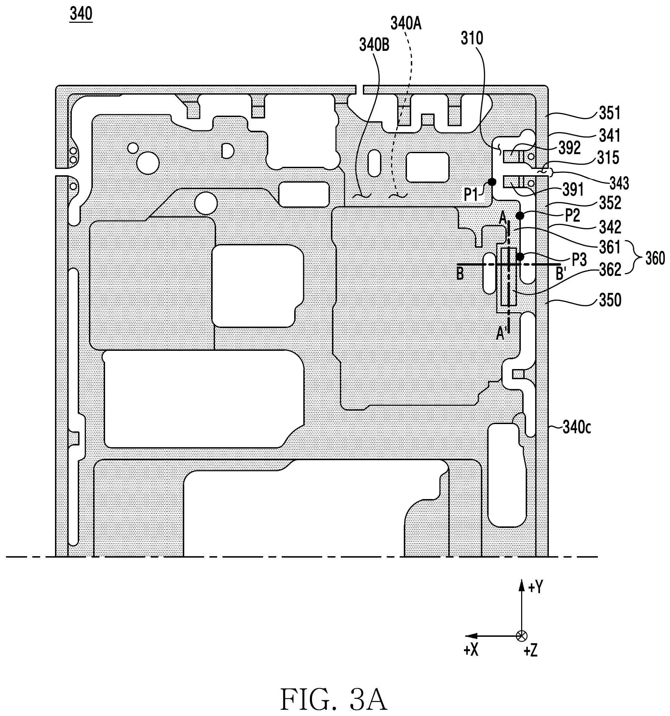

In an embodiment, the frame structure 240 may include a first part 241 and a second part 243. A peripheral part of the second part 243 may be surrounded by the first part 241. The first part 241 may surround a space between the rear plate 211 and a front plate 202 (and/or the display 201). The first part 241 surrounding the space may at least partially form a side surface (e.g., the third surface 200C of FIG. 2A) of the electronic device 200, and the second part 243 positioned in the space may extend inward from the first part 241. The second part 243 may be positioned below the display 201 (e.g., in the -Z direction). In an embodiment, the first part 241 and the second part 243 may be formed of metal and/or polymer. For example, the first part 241 may include a portion (e.g., the first conductive portion 350 of FIG. 3A) formed of a conductive material such as metal. For example, the second part 243 may include a portion (e.g., the second conductive portion 360 of FIG. 3A) formed of a conductive material such as metal.

In an embodiment, the first part 241 of the frame structure 240 forming the side surface of the electronic device 200 may be referred to as a side member, and the second part 243 of the frame structure 240 supporting various components of the electronic device 200 may be referred to as a support member.

In an embodiment, the first printed circuit board 250, the second printed circuit board 252, and the battery 270 may be coupled to the frame structure 240, respectively. For example, the first printed circuit board 250 and the second printed circuit board 252 may be fixedly disposed in the frame structure 240 through a coupling member such as a screw. For example, the battery 270 may be fixedly disposed in the frame structure 240 through an adhesive member (e.g., a double-sided tape). However, it is not limited by the above-described example.

In an embodiment, the display 201 may be disposed between the frame structure 240 and the front plate 202. For example, the front plate 202 may be disposed on a side of the display 201(e.g., in the +Z direction), and the frame structure 240 may be disposed on another side (e.g., in the -Z direction).

In an embodiment, the front plate 202 may be coupled to the display 201. For example, the display 201 may be attached to a back surface of the front plate 202 through an optical adhesive member (e.g., an optically clear adhesive (OCA) or an optically clear resin (OCR)).

In an embodiment, the front plate 202 may be coupled to the frame structure 240. For example, the front plate 202 may include an outer peripheral part extending outside the display 201 when viewed in a z-axis direction. The outer peripheral part of the front plate 202 may be coupled to the frame structure 240 (e.g., the first part 241).

In an embodiment, a processor (e.g., the processor 120 of FIG. 1), memory (e.g., the memory 130 of FIG. 1), and/or an interface (e.g., the interface 177 of FIG. 1) may be disposed on the first printed circuit board 250 and/or the second printed circuit board 252. The processor may include, for example, one or more of a central processing unit, an application processor, a graphics processing unit, an image signal processor, a sensor hub processor, or a communication processor. The memory may include, for example, a volatile memory or a non-volatile memory. The interface may include, for example, a high definition multimedia interface (HDMI), a universal serial bus (USB) interface, an SD card interface, and/or an audio interface. The interface may electrically or physically connect the electronic device 200 to an external electronic device, and may include a USB connector, an SD card/MMC connector, or an audio connector. In an embodiment, the first printed circuit board 250 and the second printed circuit board 252 may be operatively or electrically connected to each other through a connection member (e.g., a flexible printed circuit board).

In an embodiment, the battery 270 may supply power to at least one component of the electronic device 200. For example, the battery 270 may include a rechargeable secondary battery or a fuel cell.

In an embodiment, a first camera module 205 (e.g., a front camera) may be disposed in at least a part (e.g., the second part 243) of the frame structure 240 such that a lens may receive external light through a partial region (e.g., a camera region 237) of the front plate 202 (e.g., the front surface 200A of FIG. 2A).

In an embodiment, the second camera module 212 (e.g., a rear camera) may be disposed between the frame structure 240 and the rear plate 211. In an embodiment, the second camera module 212 may be electrically connected to the first printed circuit board 250 through a connection member (e.g., a connector). In an embodiment, the second camera module 212 may be disposed such that a lens may receive external light through a camera region 284 of the rear plate 211 of the electronic device 200.

In an embodiment, the camera region 284 may be formed on a surface (e.g., the rear surface 200B of FIG. 2A) of the rear plate 211. In an embodiment, the camera region 284 may be formed to be at least partially transparent such that external light may be incident on the lens of the second camera module 212. In an embodiment, at least a part of the camera region 284 may protrude to a predetermined height from the surface of the rear plate 211. However, it is not limited thereto, and in another embodiment, the camera region 284 may form substantially the same plane as the surface of the rear plate 211.

In an embodiment, a housing 210 of the electronic device 200 may mean a configuration or a structure forming at least a part of an exterior of the electronic device 200. In this regard, at least a part of the front plate 202, the frame structure 240, and/or the rear plate 211 forming the exterior of the electronic device 200 may be referred to as the housing 210 of the electronic device 200.

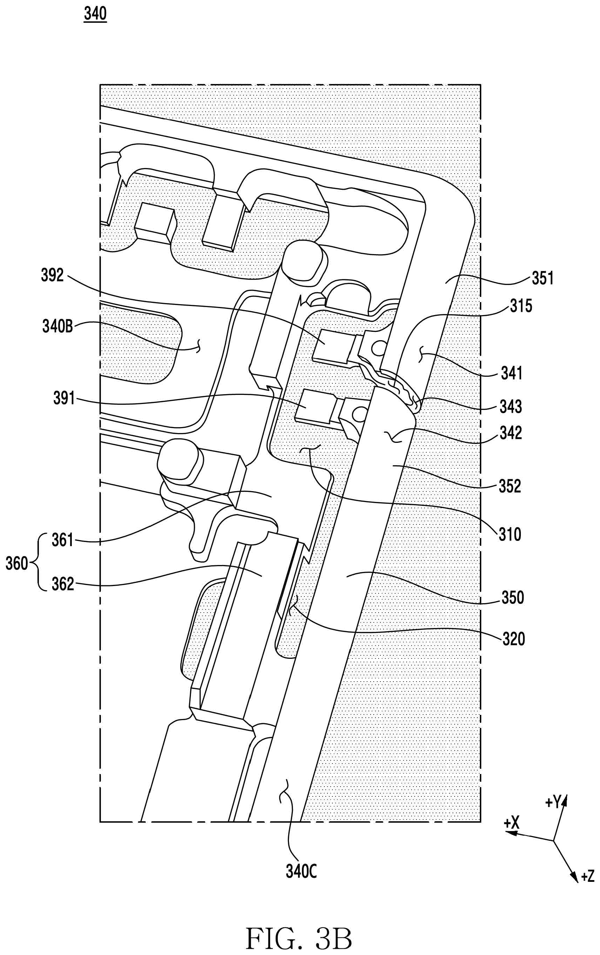

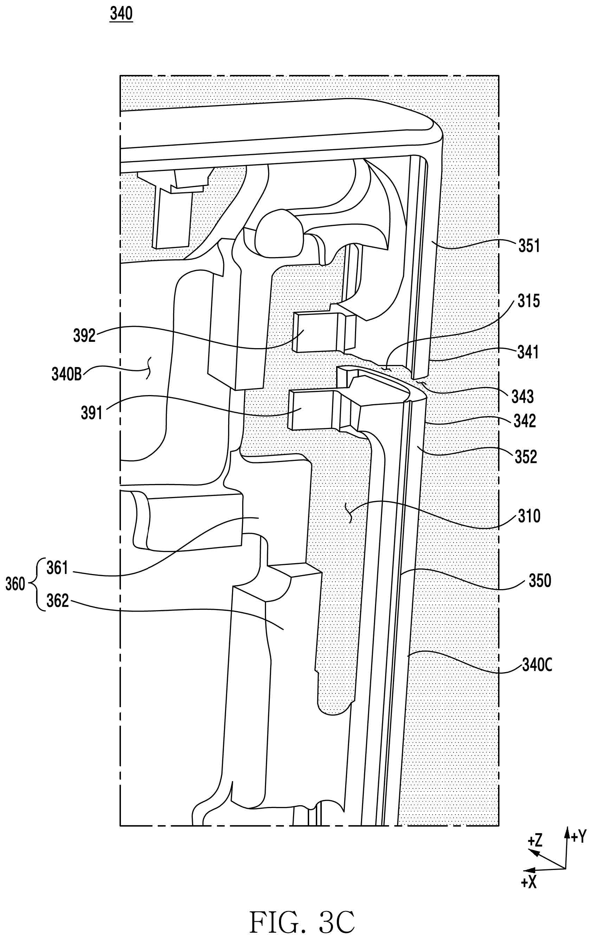

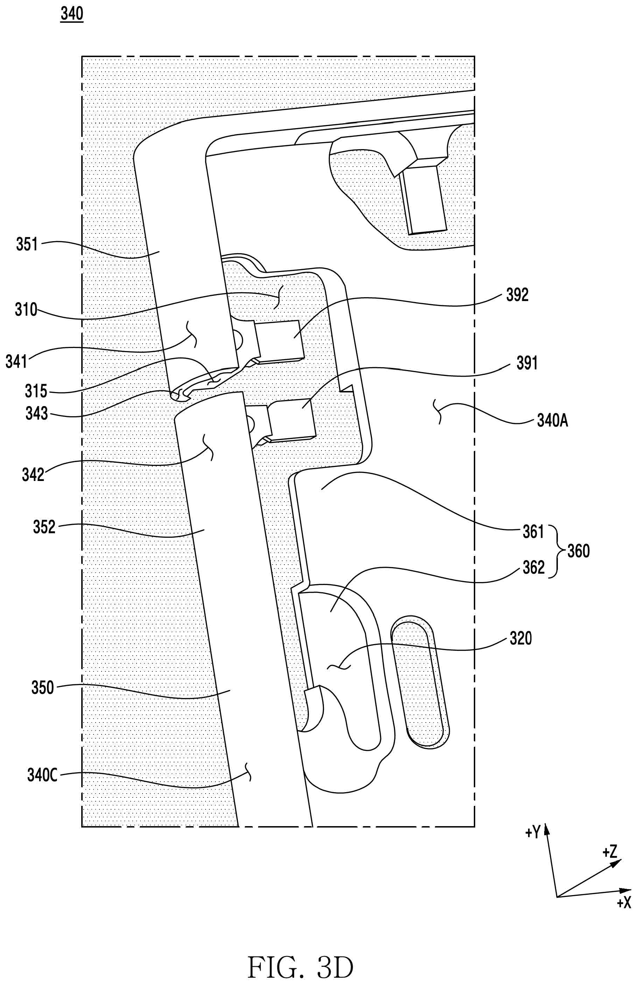

FIG. 3A, FIG. 3B, FIG. 3C, and FIG. 3D are diagrams illustrating a frame structure of an electronic device according to an embodiment. FIG. 3A is a plan view illustrating a rear surface 340B of a frame structure 340. FIG. 3B and FIG. 3C are perspective views illustrating the rear surface 340B of the frame structure 340. FIG. 3D is a perspective view illustrating a front surface 340A of the frame structure 340.

Referring to FIG. 3A, FIG. 3B, FIG. 3C, and FIG. 3D, an electronic device (e.g., the electronic device 200 of FIG. 2B) according to an embodiment may include the frame structure 340 (e.g., the frame structure 240 of FIG. 2B). The frame structure 340 may include a first conductive portion 350 (e.g., the first part 241 of FIG. 2B) and a second conductive portion 360 (e.g., the second part 243 of FIG. 2B). The first conductive portion 350 and the second conductive portion 360 may include a material having electrical conductivity such as metal. For example, the first conductive portion 350 and the second conductive portion 360 may be separately formed and coupled to each other, or may be integrally formed.

In an embodiment, the frame structure 340 may include a front surface 340A (e.g., a surface facing a +Z direction), a rear surface 340B (e.g., a surface facing a -Z direction), and a first side surface 340C (e.g., a surface facing a direction perpendicular to a Z-axis). The first side surface 340C may be, for example, a side surface substantially extending straight among side surfaces of the frame structure 340. In an example of FIG. 3A, the first side surface 340C is illustrated as being a right side surface (e.g., a surface facing a -X direction) among four side surfaces of the electronic device 200, but is not limited thereto.

In an embodiment, the first conductive portion 350 may at least partially form the first side surface 340C of the frame structure 340. The first side surface 340C of the frame structure 340 may be included in a side surface (e.g., the third surface 200C of FIG. 2A) of the electronic device. For example, the first side surface 340C of the frame structure 340 may at least partially form the side surface of the electronic device.

In an embodiment, the frame structure 340 may include a slot 310 (or a slot region). For example, the slot 310 may extend from the front surface 340A of the frame structure 340 to the rear surface 340B to penetrate the frame structure 340. For example, the slot 310 may be formed as the second conductive portion 360 is at least partially separated from the first conductive portion 350. For example, the first conductive portion 350 and the second conductive portion 360 may be spaced apart through the slot 310. The first conductive portion 350 and the second conductive portion 360 may form an edge or a boundary of the slot 310.

In an embodiment, the first conductive portion 350 may include a first segment 351 forming a first region 341 of the first side surface 340C and a second segment 352 forming a second region 342 of the first side surface 340C. The first segment 351 and the second segment 352 may be spaced apart from each other with a third region 343 therebetween.

Additionally or alternatively, the frame structure 340 may define a slit 315 (or a slit region) connected to the slot 310. For example, the slit 315 may extend from the first side surface 340C of the frame structure 340 to the slot 310. For example, the slit 315 may extend from the third region 343 of the first side surface 340C between the first region 341 and the second region 342 to the slot 310. For example, the third region 343 may be formed by a non-conductive material or a dielectric (e.g., a molded element) at least partially disposed in the slit 315.

In an embodiment, one or more recesses may be formed on the front surface 340A of the frame structure 340. The one or more recesses may be formed in the first conductive portion 350 and/or the second conductive portion 360 to be adjacent to the slot 310. For example, the one or more recesses may include a recess 320 formed in the second conductive portion 360.

In an embodiment, the second conductive portion 360 may include a first part 361 forming a part of the edge of the slot 310 and a second part 362 forming another part of the edge of the slot 310. For example, the front surface 340A and the rear surface 340B of the frame structure 340 formed by the first part 361 may be formed to be substantially flat. In this regard, the first part 361 may be referred to as a planar portion of the frame structure 340 (or the second conductive portion 360). For example, the second part 362 may define the recess 320 of the second conductive portion 360. In this regard, the second part 362 may be referred to as a recess portion of the frame structure 340 (or the second conductive portion 360). The recess 320 may be recessed from the front surface 340A of the frame structure 340 toward the rear surface 340B. At least a part of the recess 320 adjacent to the slot 310 may be open toward the slot 310. For example, the recess 320 may be open toward the first conductive portion 350 positioned on an opposite side with the slot 310 therebetween. In an embodiment, the second part 362 defining the recess 320 may protrude on the rear surface 340B of the frame structure 340. For example, at least a part of the second part 362 may be positioned higher than the first part 361 based on the -Z direction.

In an embodiment, the first conductive portion 350 and/or the second conductive portion 360 may include point(s), region(s), or portion(s) positioned adjacent to the slot 310 and electrically connected to a wireless communication circuit (e.g., the wireless communication module 192 of FIG. 1) of the electronic device. For example, the first conductive portion 350 may include feeding parts 391 and 392 adjacent to the slot 310 or forming a part of the edge of the slot 310. The contact parts 391 and 392 may have a shape protruding toward the second conductive portion 360 from another part of the first conductive portion 350, but are not limited thereto. The contact part 391 and the contact part 392 may be, for example, electrically connected to the wireless communication circuit. For another example, one of the contact part 391 and the contact part 392 may be electrically connected to the wireless communication circuit, and another one may be electrically connected to a ground of the electronic device. The wireless communication circuit may transmit and/or receive a radio frequency (RF) signal by feeding through the contact part 391 and/or the contact part 392. For example, the wireless communication circuit may transmit and/or receive an RF signal through an antenna using the slot 310. For example, the RF signal transmitted and received through the antenna using the slot 310 may have a frequency band of 2 GHz or more, but is not limited thereto.

In an embodiment, the contact part 391 and/or the contact part 392 may be referred to as a feeding part. Additionally or alternatively, the wireless communication circuit may be electrically connected to at least one point (e.g., at least one of feeding points P1, P2, and P3) of the second conductive portion 360 corresponding to the edge of the slot 310. The wireless communication circuit may transmit and/or receive the RF signal by feeding through the at least one point.

Although not illustrated, the frame structure 340 may include one or more non-conductive portions at least partially disposed in an internal volume of the frame structure 340, such as a hole, an opening, a recess (e.g., the recess 320), a slot (e.g., the slot 310), and a slit (e.g., the slit 315) formed in the frame structure 340. The one or more non-conductive portions may be integrally formed, but are not limited thereto.

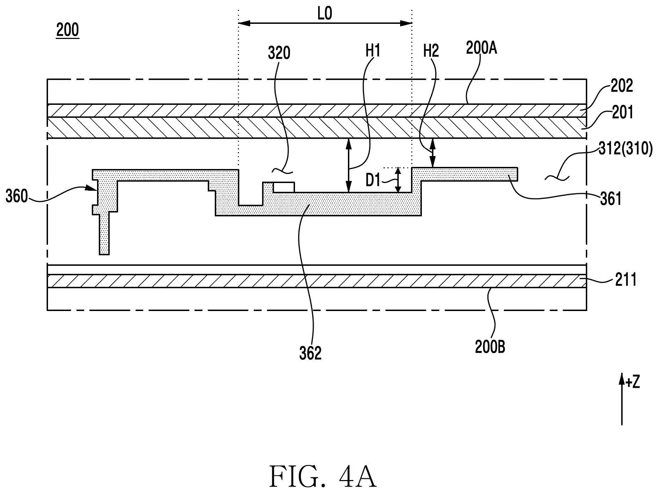

FIG. 4A is a cross-sectional view of an electronic device according to an embodiment. FIG. 4A illustrates a cross section taken along line A-A' of FIG. 3A.

Referring to FIG. 4A, in an embodiment, a second conductive portion 360 of an electronic device 200 may be disposed between a display 201 and a rear plate 211 (or a rear cover). The second conductive portion 360 may overlap the display 201 based on a direction perpendicular to the display 201 (e.g., a Z-axis direction). The display 201 may be visible through a front surface 200A of the electronic device 200. For example, the display 201 may be visible through a front plate 202 (or a window) forming the front surface 200A of the electronic device 200.

In an embodiment, a recess 320 of a second part 362 may be recessed toward the rear plate 211 (or a rear surface 200B of the electronic device 200 formed by the rear plate 211) such that the second part 362 is spaced further from the display 201 than a first part 361. The second part 362 may be positioned further from the display 201 than the first part 361 by being recessed toward the rear surface 200B. For example, a first distance H1 from the display 201 to the second part 362 may be greater than a second distance H2 from the display 201 to the first part 361. The first distance H1 may be a distance from a back surface of the display 201 to a bottom surface of the recess 320 facing the display 201. The second distance H2 may be a distance from the back surface of the display 201 to a surface of the first part 361 (e.g., the front surface 340A formed by the first part 361 of FIG. 3D) facing the display 201. The first distance H1 and the second distance H2 may be distances based on the direction substantially perpendicular to the display 201.

For example, a depth D1 of the recess 320 based on the direction perpendicular to the display 201 (e.g., a Z-axis direction) may be about 0.5 mm or more, but is not limited thereto. For example, the depth D1 of the recess 320 may be about 1.5 mm or more, but is not limited thereto. For example, the depth D1 of the recess 320 may be about 1.5 mm or more and about 3.0 mm or less, but is not limited thereto.

Although not illustrated, the electronic device 200 according to an embodiment may further include a shielding member disposed between the display 201 and the second conductive portion 362 and disposed to substantially overlap the first part 361 and the second part 362 when viewed in the direction substantially perpendicular to the display 201.

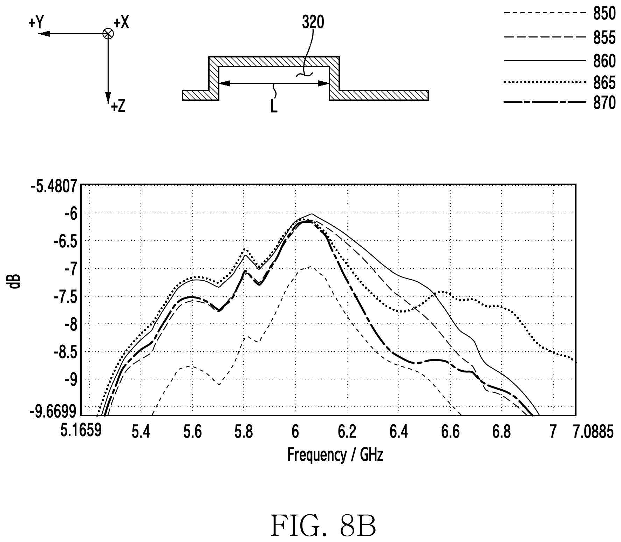

In an embodiment, the recess 320 may have a length L0 based on a direction substantially parallel to the display 201 (e.g., a direction perpendicular to the Z-axis). For example, the length L0 may vary according to a required characteristic of an antenna using the conductive portion 360. This will be described later with reference to FIG. 8B and FIG. 11A to FIG. 12D.

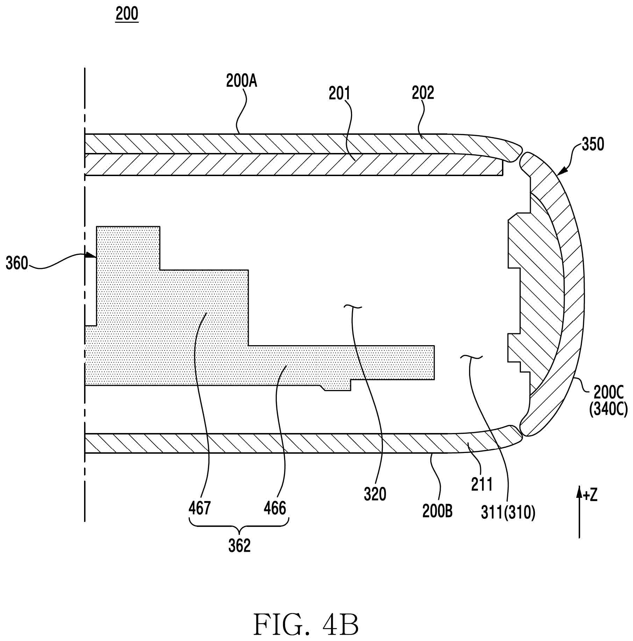

FIG. 4B is a cross-sectional view of an electronic device according to an embodiment. FIG. 4B illustrates a cross section taken along line B-B' of FIG. 3A.

Referring to FIG. 4B, in an embodiment, a slot 310 may be positioned below the display 201. For example, the slot 310 may substantially face the display 201. For example, the slot 310 may at least partially overlap the display 201 based on a direction perpendicular to the display 201.

In an embodiment, at least a part of the recess 320 may be open toward the slot 310 or a first conductive portion 350 so as to be connected to the slot 310. For example, the second part 362 may include a bottom portion 466 forming a bottom surface of the recess 320 and forming a part of an edge of the slot 310. In addition, the second part 362 may include a sidewall portion 467 forming a side surface of the recess 320 by extending from the bottom portion 466 in a height direction (e.g., a Z-axis direction). The sidewall portion 467 may not be formed on an edge part of the bottom portion 466 forming a boundary of the slot 310, such that the recess 320 is open toward the slot 310. Alternatively, the sidewall portion 467 may not be formed on the edge part of the bottom portion 466 facing the first conductive portion 350, such that the recess 320 is open toward the first conductive portion 350. For example, the bottom portion 466 may be formed to be substantially flat, but is not limited thereto.

Referring to FIG. 4A and FIG. 4B, in an embodiment, a section 311 of the slot 310 formed by the second part 362 may be positioned farther from the display 201 than a section 312 of the slot 310 formed by the first part 361.

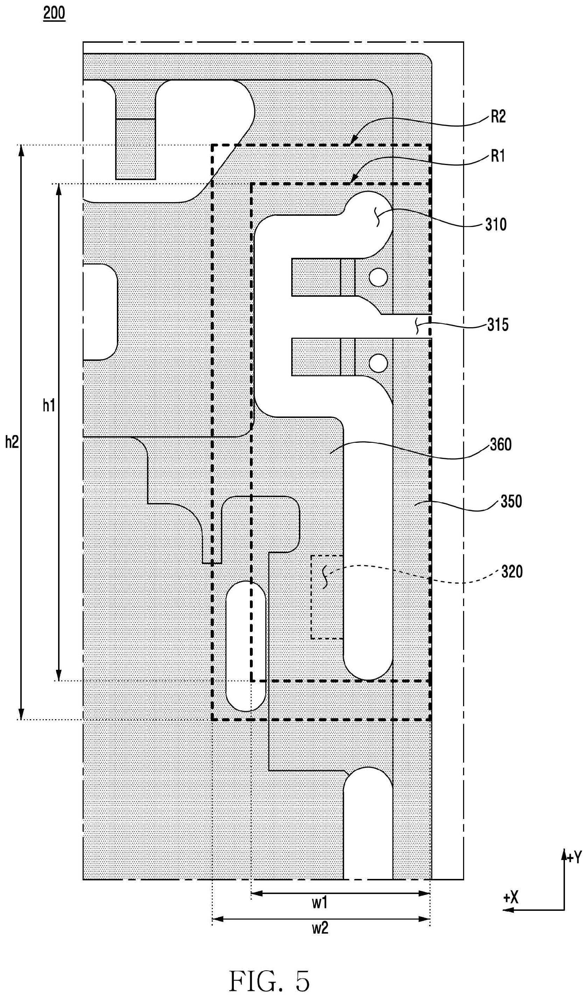

FIG. 5 is a diagram illustrating an antenna region of an electronic device according to an embodiment. Referring to FIG. 5, an electronic device 200 according to an embodiment may include a region R1 including a slot 310, a slit 315, and/or a recess 320. For example, the region R1 may have a height h1 (e.g., a length based on a Y-axis direction) and a width w1 (e.g., a length based on an X-axis direction).

The electronic device 200 according to an embodiment may include an antenna region R2 including the region R1. The antenna region R2 may include the slot 310, the slit 315, the recess 320, and/or conductive portions (e.g., a first conductive portion 350 and a second conductive portion 360) around them. A height h2 of the antenna region R2 may further extend in a +Y direction and a -Y direction than the height h1 of the region R1. For example, the height h2 of the antenna region R2 may extend by about 2.5 mm in the +Y direction and may extend by about 2.5 mm in the -Y direction than the height h1 of the region R1, but is not limited thereto. A width w2 of the antenna region R2 may further extend in a +X direction than the width w1 of the region R1. For example, the width w2 of the antenna region R2 may further extend by about 2.5 mm in the +X direction than the width w1 of the region R1, but is not limited thereto. In an embodiment, the height h2 of the antenna region R2 may be about 27.2 mm to about 36.9 mm, but is not limited thereto. For example, the width w2 of the antenna region R2 may be about 10.7 mm, but is not limited thereto. In an embodiment, a length of the recess 320 (e.g., a length according to a Y-axis direction) may be equal to or less than half of the height h1 of the region R1 corresponding to a length of the slot 310, but is not limited thereto.

The wireless communication circuit may transmit and/or receive an RF signal by using the antenna region R2. The RF signal may include, for example, a frequency band for supporting GPS (e.g., GPS L5), and/or a frequency band for supporting Wi-Fi (e.g., 2.4 GHz, 5 GHz, or 6 GHz).

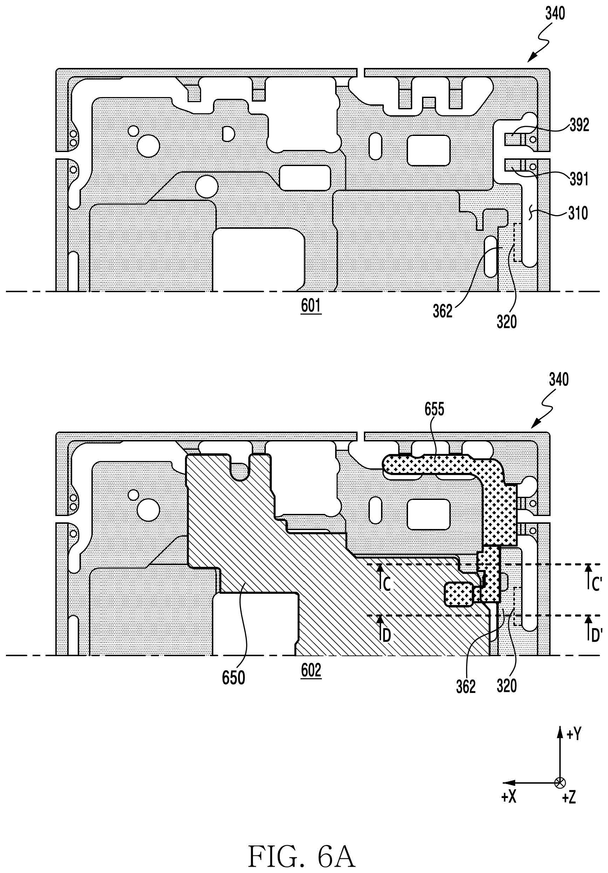

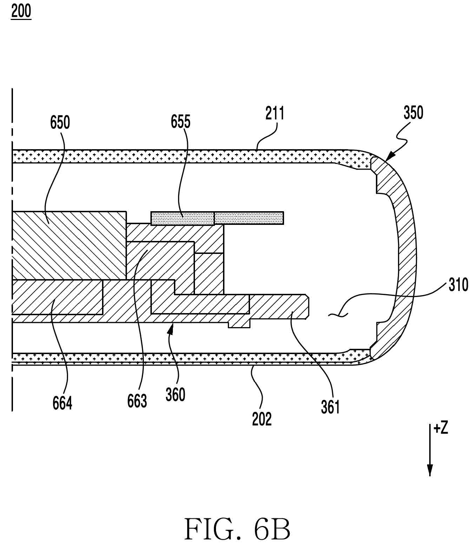

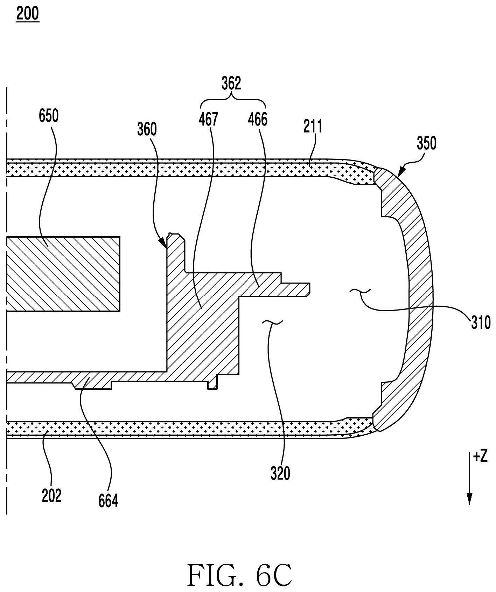

FIG. 6A illustrates a frame structure, a printed circuit board, and a connection member of an electronic device according to an embodiment. FIG. 6B is a cross-sectional view taken along line C-C' of FIG. 6A. FIG. 6C is a cross-sectional view taken along line D-D' of FIG. 6A. An example 601 of FIG. 6A represents a frame structure 340 in which a printed circuit board 650 and a connection member 655 are omitted, and an example 602 represents the frame structure 340 in which the printed circuit board 650 and the connection member 655 are disposed.

Referring to FIG. 6A, an electronic device 200 according to an embodiment may include the printed circuit board 650 and the connection member 655 disposed on the frame structure 340.

In an embodiment, the printed circuit board 650 (e.g., the first printed circuit board 250 of FIG. 2B) may be disposed on the frame structure 340. For example, the printed circuit board 650 may be disposed on a rear surface 340B of the frame structure 340. For example, the printed circuit board 650 may be disposed to avoid a recess 320 (or a second part 362 defining the recess 320). For example, the printed circuit board 650 may be disposed so as not to overlap the recess 320 based on a direction perpendicular to the frame structure 340 (e.g., a Z-axis direction). For example, the printed circuit board 650 may be disposed to avoid a slot 310. For example, the printed circuit board 650 may be disposed so as not to overlap the slot 310 based on a direction perpendicular to the frame structure 340 (e.g., the Z-axis direction).

Although not illustrated, the wireless communication circuit may be disposed on the printed circuit board 650. The connection member 655 may be connected to the printed circuit board 650 and a contact part 391 in order to electrically connect the contact part 391 and the wireless communication circuit. For example, the connection member 655 may include a section extending from a region on the printed circuit board 650, across the slot 310, to the contact part 391. For example, the connection member 655 may include a flexible printed circuit board, but is not limited thereto.

Referring to FIG. 6B, in an embodiment, a second conductive portion 360 may include a first support portion 663 protruding toward a rear plate 211 relative to a first part 361 forming a part of the slot 310, and a second support portion 664 extending from the first part 361. For example, the first support portion 663 may be positioned between the first part 361 and the second support portion 664. For example, the printed circuit board 650 may be disposed on the second support portion 664 such that a side surface thereof faces the first support portion 663. For example, the first support portion 663 may support the connection member 655, and the second support portion 664 may support the printed circuit board 650.

Referring to FIG. 6C, in an embodiment, the second part 362 forming the recess 320 may protrude toward the rear plate 211 relative to the second support portion 664. For example, the second part 362 of the second conductive portion 360 may be positioned between the printed circuit board 650 and the slot 310. The printed circuit board 650 may be disposed on the second support portion 664 such that a side surface thereof faces the second part 362 (e.g., a sidewall portion 467). For example, the sidewall portion 467 of the second part 362 may be positioned between the recess 320 and the printed circuit board 650.

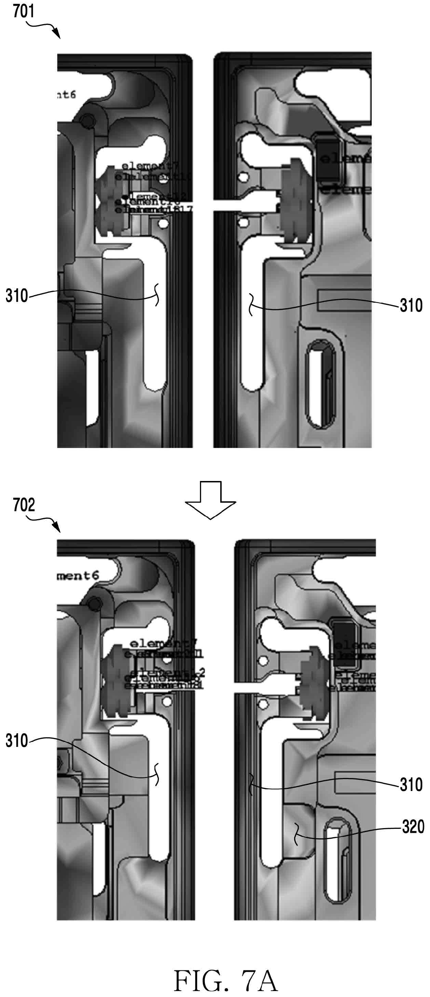

FIG. 7A is a diagram illustrating a distribution of an electric field of an electronic device according to a comparative example and an electronic device according to an embodiment.

An example 701 of FIG. 7A illustrates the electronic device according to a comparative example, and an example 702 illustrates the electronic device (e.g., the electronic device 200 of FIG. 4A) according to an embodiment. Referring to FIG. 7A, the electronic device according to an embodiment of the example 702 may include a recess 320 and a slot 310, and the electronic device according to a comparative example of the example 701 may include the slot 310 without including the recess 320. Accordingly, in the electronic device according to a comparative example of the example 701, an electric field distribution of a middle portion of the slot 310 may be formed to be relatively weak, and in the electronic device according to an embodiment of example 702, an electric field distribution of a middle portion of the slot 310 may be formed to be relatively strong. Due to this, antenna performance (e.g., a radiation pattern and antenna efficiency) using the slot 310 of the electronic device according to an embodiment may be improved.

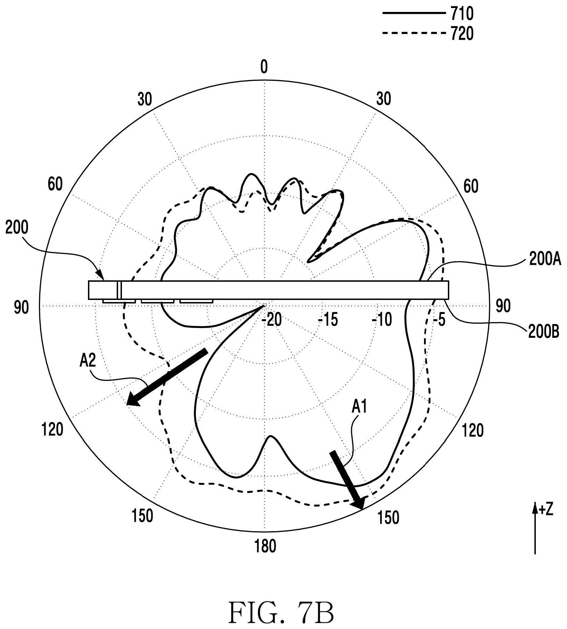

FIG. 7B represents a radiation pattern of an electronic device according to an embodiment. A graph 710 of FIG. 7B represents a radiation pattern of an electronic device according to a comparative example (e.g., the electronic device of the example 701 of FIG. 7A), and a graph 720 represents a radiation pattern of the electronic device 200 according to an embodiment (e.g., the electronic device of the example 702 of FIG. 7A).

Referring to FIG. 7B, in the graph 720 of the electronic device 200 according to an embodiment, a radiation pattern in a direction of a rear surface 200B of the electronic device 200 may be improved, compared to the graph 710 of a comparative example. For example, as illustrated by an arrow A1, peak performance in the direction of the rear surface 200B may be effectively improved, and as illustrated by an arrow A2, a radiation pattern for a null region may be improved. In addition, in the electronic device 200 according to an embodiment, a radiation pattern in a direction of a front surface 200A may be improved, compared to a comparative example.

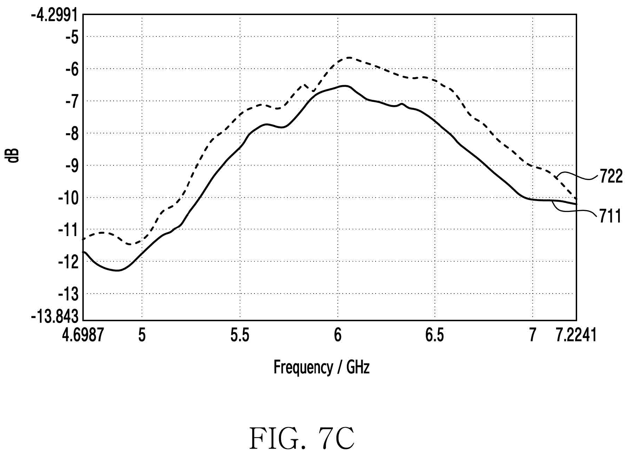

FIG. 7C is a graph illustrating antenna efficiency (e.g., total efficiency) of an electronic device according to a comparative example and an electronic device according to an embodiment.

A graph 711 of FIG. 7C illustrates antenna efficiency of an electronic device according to a comparative example (e.g., the electronic device of the example 701 of FIG. 7A), and a graph 722 illustrates antenna efficiency of an electronic device according to an embodiment (e.g., the electronic device of the example 702 of FIG. 7A). Referring to FIG. 7C, antenna efficiency of the electronic device according to an embodiment (i.e., the graph 722) may be improved, compared to antenna efficiency of the electronic device of a comparative example (i.e., the graph 711).

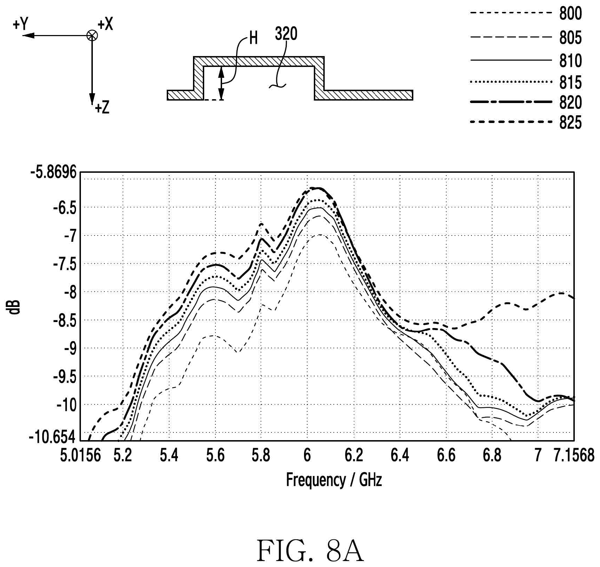

FIG. 8A illustrates antenna efficiency according to a height of a recess of an electronic device according to an embodiment. Graphs 800, 805, 810, 815, 820, and 825 of FIG. 8A represent antenna efficiency when a height H (e.g., the depth D1 of FIG. 4A) of a recess 320 is sequentially increased. For example, the height H of the recess 320 may be based on a direction parallel to a Z-axis.

For example, the graph 800 may be antenna efficiency when the recess 320 is absent, that is, when the height H of the recess 320 is 0. For example, the graph 805 represents antenna efficiency when the height H of the recess 320 is greater than that of the graph 800. For example, the graph 805 may be antenna efficiency when the height H of the recess 320 is 0.5 mm. For example, the graph 810 represents antenna efficiency when the height H of the recess 320 is greater than that of the graph 805. For example, the graph 810 may be antenna efficiency when the height H of the recess 320 is 1.0 mm. For example, the graph 815 represents antenna efficiency when the height H of the recess 320 is greater than that of the graph 810. For example, the graph 815 may be antenna efficiency when the height H of the recess 320 is 1.5 mm. For example, the graph 820 represents antenna efficiency when the height H of the recess 320 is greater than that of the graph 815. For example, the graph 820 may be antenna efficiency when the height H of the recess 320 is 2.0 mm. For example, the graph 825 represents antenna efficiency when the height H of the recess 320 is greater than that of the graph 820. For example, the graph 825 may be antenna efficiency when the height H of the recess 320 is 2.5 mm. Referring to FIG. 8A, as the height H of the recess 320 increases (i.e., from the graph 800 to the graph 825), antenna efficiency may be improved. This may be because a part of an antenna region (e.g., the antenna region R2 of FIG. 5) is spaced apart from a display (e.g., the display 201 of FIG. 4A) due to the recess 320, and may be because a volume of an antenna using a slot (e.g., the slot 310 of FIG. 3A) is expanded due to the recess 320.

FIG. 8B illustrates antenna efficiency according to a length of a recess of an electronic device according to an embodiment. Graphs 850, 855, 860, 865, and 870 of FIG. 8B represent antenna efficiency when a length L (e.g., the length L0 of FIG. 4A) of the recess 320 is sequentially increased. For example, the length L of the recess 320 may be based on a direction parallel to a Y-axis. For example, the graph 850 may be antenna efficiency when the recess 320 is absent, that is, when the length L of the recess 320 is 0. For example, the graph 855 represents antenna efficiency when the length L of the recess 320 is greater than that of the graph 850. For example, the graph 855 may be antenna efficiency when the length L of the recess 320 is 1.0 mm. For example, the graph 860 represents antenna efficiency when the length L of the recess 320 is greater than that of the graph 855. For example, the graph 860 may be antenna efficiency when the length L of the recess 320 is 3.0 mm. For example, the graph 865 represents antenna efficiency when the length L of the recess 320 is greater than that of the graph 860. For example, the graph 865 may be antenna efficiency when the length L of the recess 320 is 5.0 mm. For example, the graph 870 represents antenna efficiency when the length L of the recess 320 is greater than that of the graph 865. For example, the graph 870 may be antenna efficiency when the length L of the recess 320 is 7.0 mm. Referring to FIG. 8B, in the graphs 855, 860, 865, and 870, radiation efficiency is significantly improved compared to the graph 850. That is, as the recess 320 is formed, radiation efficiency of an antenna may be improved. In an embodiment, radiation efficiency and a bandwidth of the antenna may vary according to the length L of the recess 320. For example, within a certain range of the length L of the recess 320, as the length L increases, radiation efficiency and a bandwidth of the antenna may be improved (e.g., the graphs 855 and 860). However, a relationship between the length L of the recess 320 and a resonance frequency may not be great.

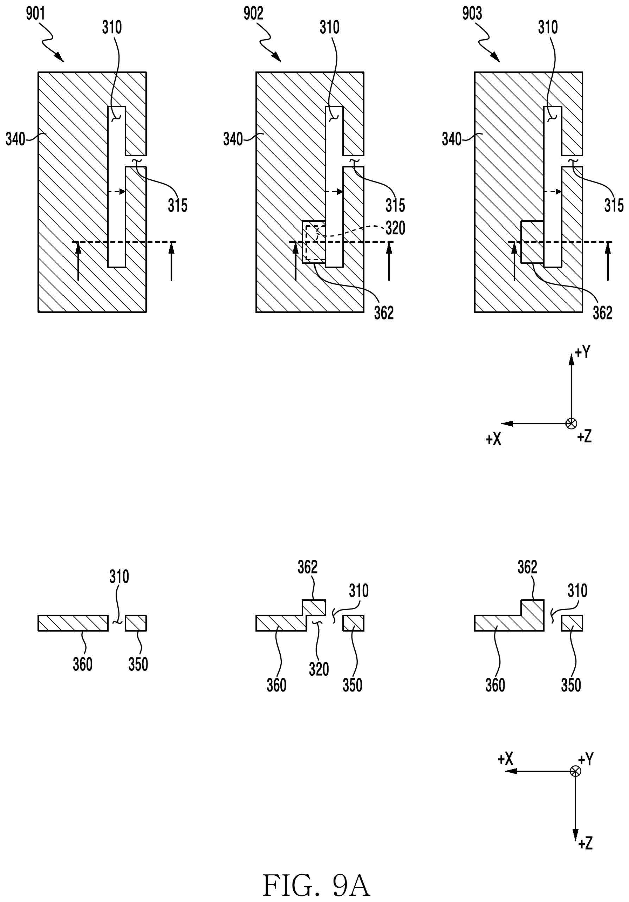

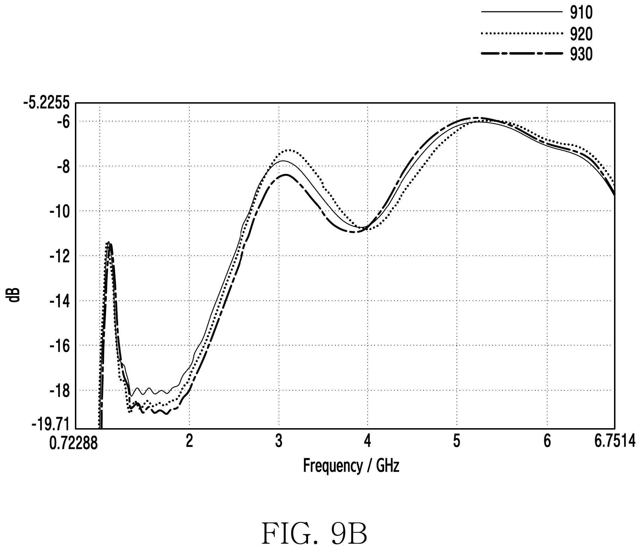

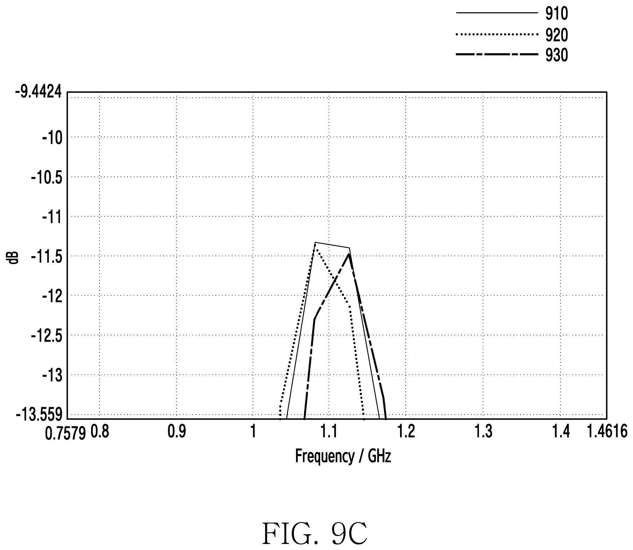

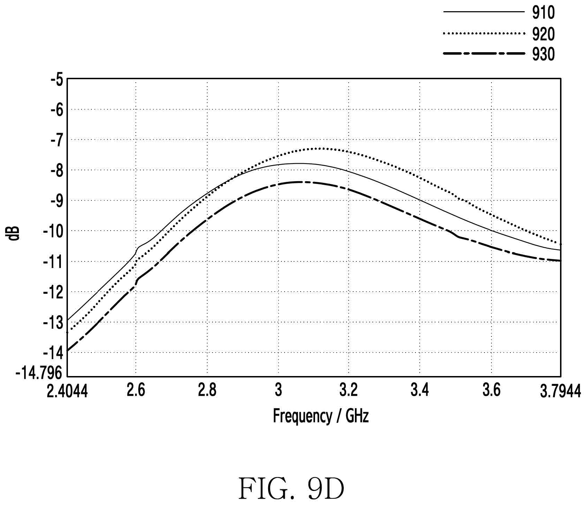

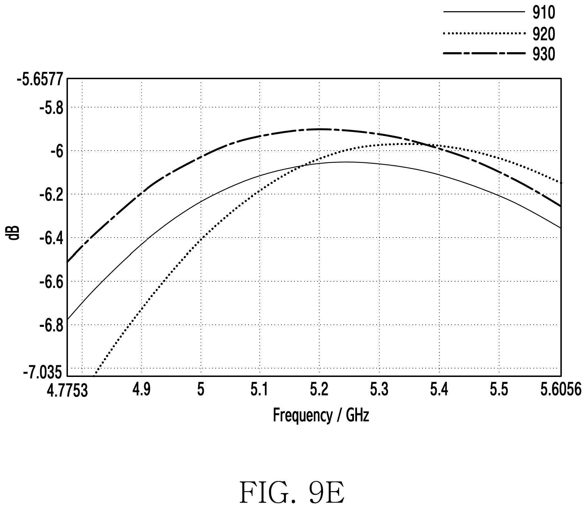

FIG. 9A illustrates examples of an electronic device including a slot. FIG. 9B, FIG. 9C, FIG. 9D, and FIG. 9E are graphs illustrating antenna efficiency (e.g., total efficiency) according to the examples of FIG. 9A. A dotted arrow illustrated in FIG. 9A may be a feeding line connected to a point of a frame structure 340 corresponding to an edge of a slot (or a slit) 310 (e.g., a feeding line connected to a point indicated by an end of the arrow), but a position of the feeding line is not limited by the illustrated example. Graphs 910, 920, and 930 of FIG. 9B, FIG. 9C, FIG. 9D, and FIG. 9E may represent antenna efficiency of examples 901, 902, and 903 of FIG. 9A, respectively. FIG. 9C is a graph obtained by enlarging a graph of a first frequency band of about 0.76 GHz to about 1.46 GHz of FIG. 9B. FIG. 9D is a graph obtained by enlarging a graph of a second frequency band of about 2.40 GHz to about 3.79 GHz of FIG. 9B. FIG. 9E is a graph obtained by enlarging a graph of a third frequency band of about 4.77 GHz to about 5.60 GHz of FIG. 9B. For example, the first frequency band may include a GPS L5 band of 1176.45 GHz. For example, the second frequency band may include a Wi-Fi frequency band of 2.4 GHz. For example, the third frequency band may include a Wi-Fi frequency band of 5.0 GHz.

Referring to FIG. 9A, in a comparative example 901, the slot 310 may be formed between a first conductive portion 350 and a second conductive portion 360 of the frame structure 340, and a slit 315 connected to the slot 310 may be formed in the first conductive portion 350. However, in the comparative example 901, a recess 320 may not be formed. In an embodiment 902, compared to comparative example 901, the second conductive portion 360 may further include a second part 362 protruding and formed to define the recess 320. The recess 320 may be connected to the slot 310. A comparative example 903 may not include the recess 320 of the embodiment 902. The comparative example 903 may further include the second part 362 in which the second conductive portion 360 protrudes in a rear direction (e.g., a -Z direction), compared to the comparative example 901.

Referring to FIG. 9A, FIG. 9B, and FIG. 9C, in the first frequency band, a difference in antenna efficiency according to the examples 901, 902, and 903 may not be great.

Referring to FIG. 9A, FIG. 9B, and FIG. 9D, in the second frequency band, antenna efficiency of the graph 920 of the embodiment 902 may be improved, compared to the graph 910 of the comparative example 901. For example, at 2.4 GHz, antenna efficiency of the graph 920 of the embodiment 902 may be improved by about 0.5 dB, compared to the graph 910 of the comparative example 901.

Referring to FIG. 9A, FIG. 9B, and FIG. 9E, in the third frequency band, antenna efficiency of the graph 920 of the embodiment 902 may be partially improved, compared to the graph 910 of the comparative example 901. In addition, in the third frequency band, the antenna efficiency of the graph 920 of the embodiment 902 and the graph 930 of the comparative example 903 may be improved, compared to the graph 910 of the comparative example 901. This may be because a directionality of a field formed by the slot 310 is changed as a height (or a thickness) of the slot 310 (e.g., a length of the slot 310 according to the Z-axis direction of FIG. 4B) is increased due to the second part 362 protruding and formed in the second conductive portion 360.

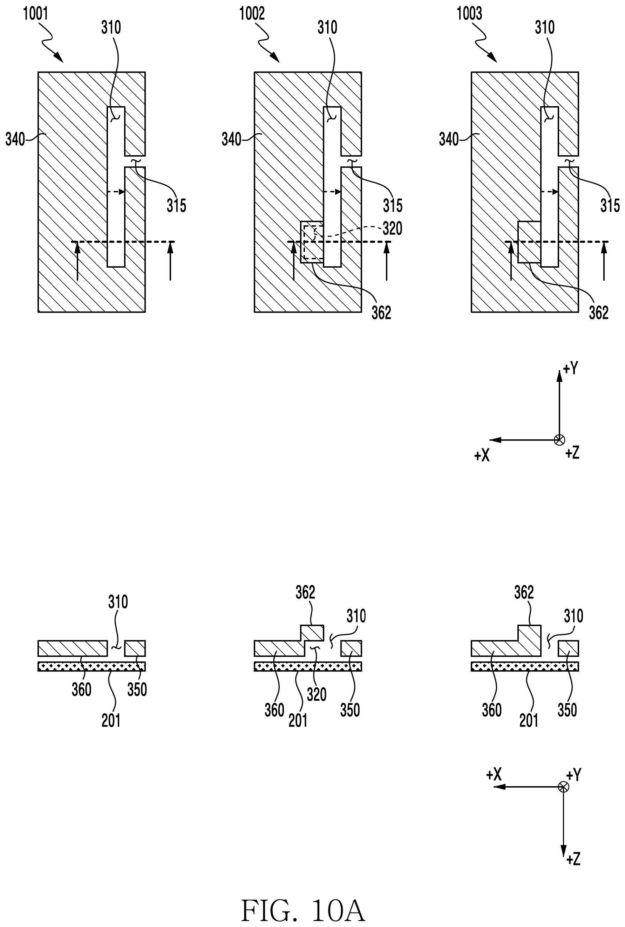

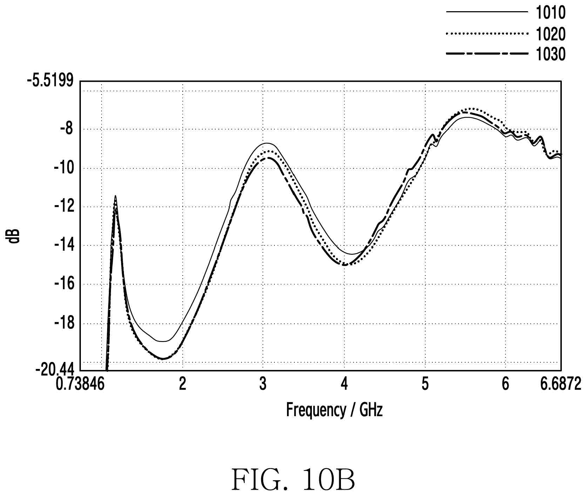

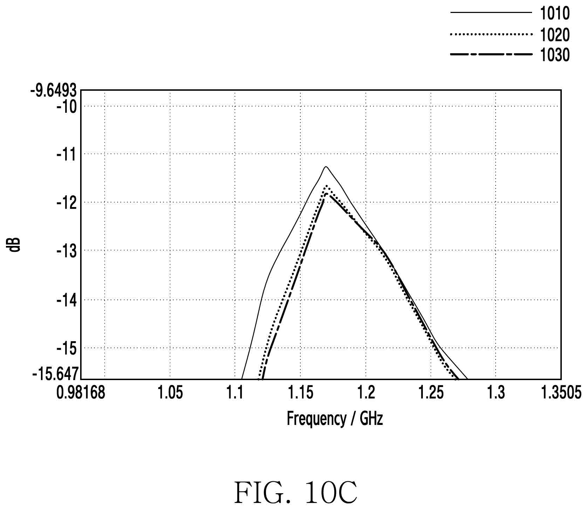

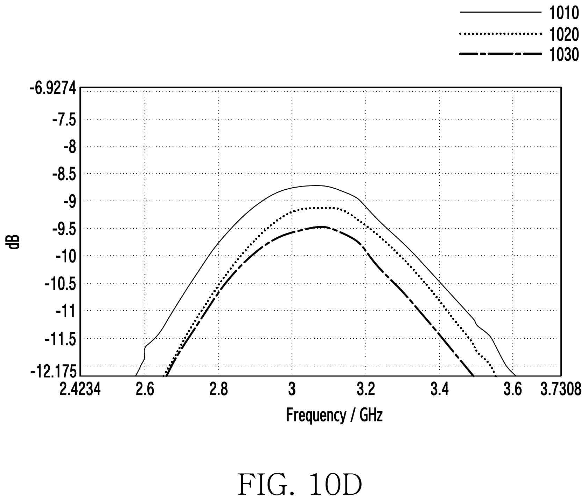

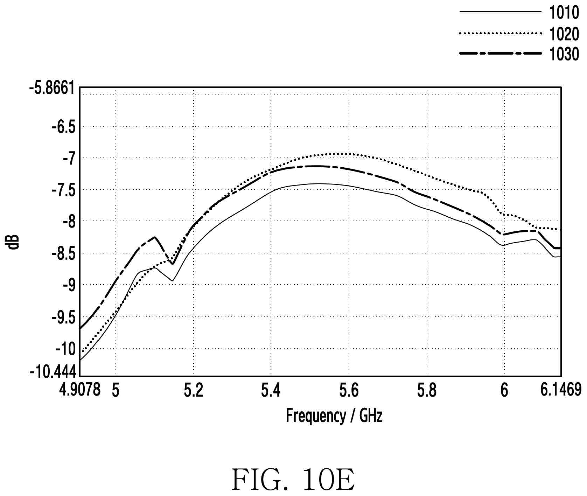

FIG. 10A illustrates examples of an electronic device including a slot. FIG. 10B, FIG. 10C, FIG. 10D, and FIG. 10E are graphs illustrating antenna efficiency (e.g., total efficiency) according to the examples of FIG. 10A. A dotted arrow illustrated in FIG. 10A may be a feeding line connected to a point of a frame structure 340 corresponding to an edge of a slot (or a slit) 310, but a position of the feeding line is not limited by the illustrated example. Graphs 1010, 1020, and 1030 of FIG. 10B, FIG. 10C, FIG. 10D, and FIG. 10E may represents antenna efficiency of examples 1001, 1002, and 1003 of FIG. 10A, respectively. FIG. 10C is a graph obtained by enlarging a graph of a first frequency band of about 0.98 GHz to about 1.35 GHz of FIG. 10B. FIG. 10D is a graph obtained by enlarging a graph of a second frequency band of about 2.42 GHz to about 3.73 GHz of FIG. 10B. FIG. 10E is a graph obtained by enlarging a graph of a third frequency band of about 4.90 GHz to about 6.14 GHz of FIG. 10B. The third frequency band may further include a Wi-Fi frequency band of 6.0 GHz.

Referring to FIG. 10A, the examples 1001, 1002, and 1003 may further include a display 201 facing the frame structure 340, when compared with the examples 901, 902, and 903 of FIG. 9A.

Referring to FIG. 10A, FIG. 10B, and FIG. 10C, in the first frequency band, antenna efficiency of the graph 1020 of an embodiment 1002 and the graph 1030 of a comparative example 1003 may be reduced, compared to the graph 1010 of a comparative example 1001. Referring to FIG. 10A, FIG. 10B, and FIG. 10D, in the second frequency band, antenna efficiency of the graph 1020 of the embodiment 1002 and the graph 1030 of the comparative example 1003 may be reduced, compared to the graph 1010 of the comparative example 1001. On the other hand, referring to FIG. 10A, FIG. 10B, and FIG. 10E, in the third frequency band, antenna efficiency of the graph 1020 of the embodiment 1002 and the graph 1030 of the comparative example 1003 may be improved, compared to the graph 1010 of the comparative example 1001.

In addition, in the third frequency band, antenna efficiency of the graph 1020 of the embodiment 1002 may be improved, compared to the graph 1030 of the comparative example 1003. This may be because an influence on antenna performance due to coupling between the frame structure 340 and the display 201 is reduced as a part of the second conductive portion 360 is moved away from the display 201 by the recess 320.

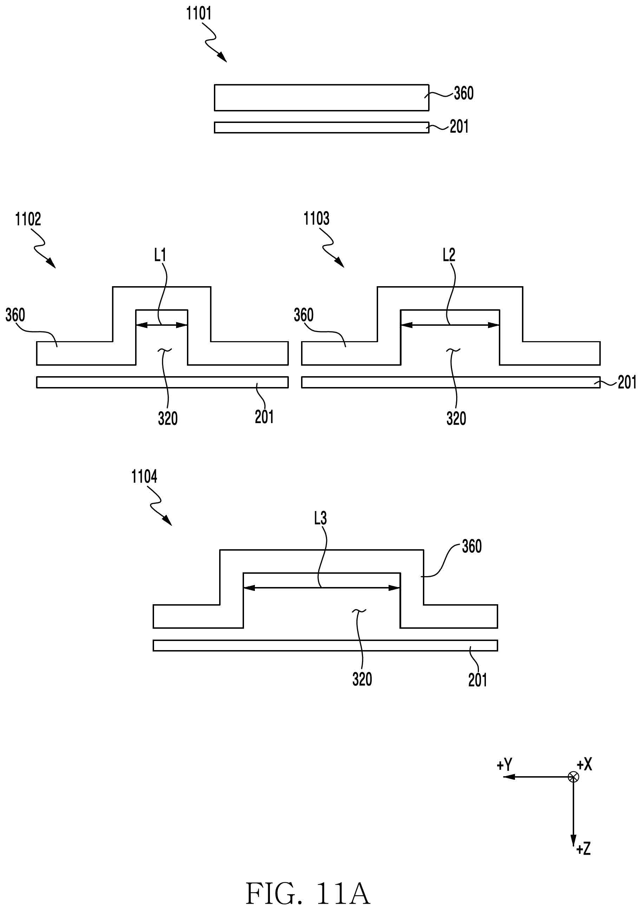

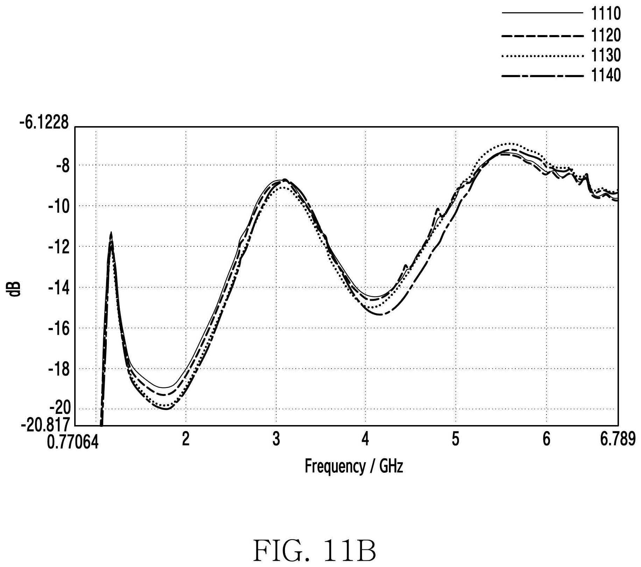

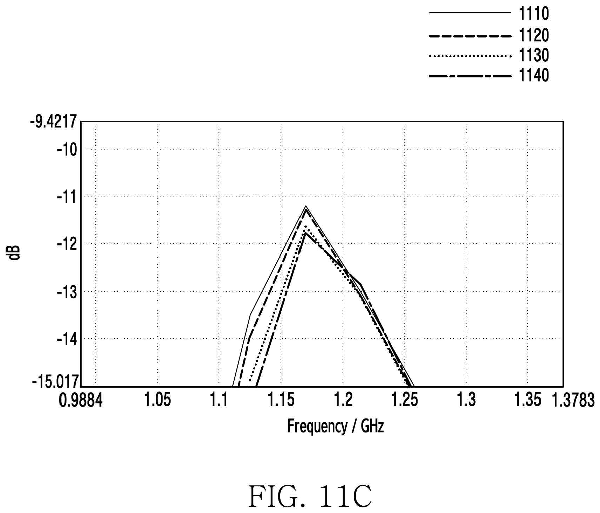

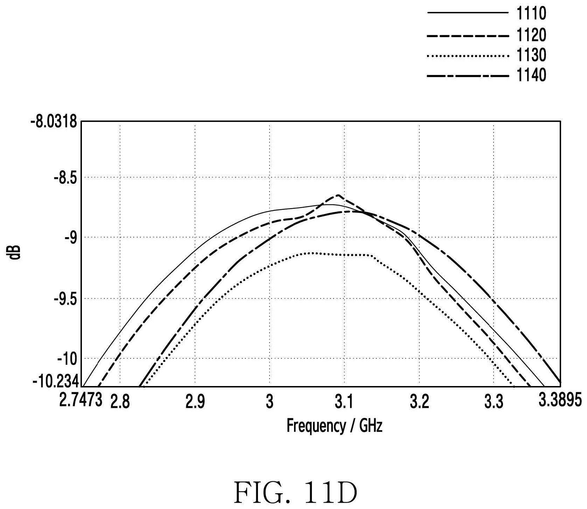

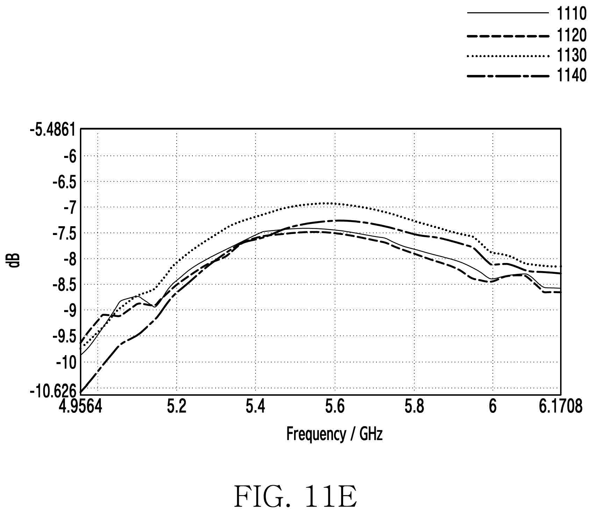

FIG. 11A illustrates examples of an electronic device having slots of various lengths. FIG. 11B, FIG. 11C, FIG. 11D, and FIG. 11E are graphs illustrating antenna efficiency (e.g., total efficiency) according to the examples of FIG. 11A. FIG. 11C is a graph obtained by enlarging a graph of a first frequency band of about 0.99 GHz to about 1.38 GHz of FIG. 11B. FIG. 11D is a graph obtained by enlarging a graph of a second frequency band of about 2.74 GHz to about 3.39 GHz of FIG. 11B. FIG. 11E is a graph obtained by enlarging a graph of a third frequency band of about 4.96 GHz to about 6.17 GHz of FIG. 11B.

Referring to FIG. 11A, an example 1101 in which a recess 320 is not formed and examples 1102, 1103, and 1104 in which the recess 320 having various lengths L1, L2, and L3 (e.g., the length L0 of FIG. 4A) is formed are illustrated. For example, the lengths L1, L2, and L3 of the recess 320 may be based on a Y-axis direction.

In an embodiment, the examples 1101, 1102, 1103, and 1104 may include a second conductive portion 360 and a display 201 below the second conductive portion 360 (e.g., in a +Z direction). In the second conductive portion 360 of the example 1101, the recess 320 may not be formed. In the second conductive portion 360 of the example 1102, the recess 320 having the first length L1 may be formed. In the second conductive portion 360 of the example 1103, the recess 320 having the second length L2 greater than the first length L1 may be formed. In the second conductive portion 360 of the example 1104, the recess 320 having the third length L3 greater than the second length L2 may be formed.

A graph 1110 of FIG. 11B, FIG. 11C, FIG. 11D, and FIG. 11E may represent antenna efficiency of the example 1101. A graph 1120 of FIG. 11B, FIG. 11C, FIG. 11D, and FIG. 11E may be antenna efficiency when the first length L1 of the recess 320 of the example 1102 is 3.0 mm. A graph 1130 of FIG. 11B, FIG. 11C, FIG. 11D, and FIG. 11E may be antenna efficiency when the second length L2 of the recess 320 of the example 1103 is 15.0 mm. A graph 1140 of FIG. 11B, FIG. 11C, FIG. 11D, and FIG. 11E may be antenna efficiency when the third length L3 of the recess 320 of the example 1104 is 22.0 mm.

Referring to FIG. 11B, FIG. 11C, FIG. 11D, and FIG. 11E, the graph 1120 of the example 1102 in which the length of the recess 320 is shortest may show a tendency similar to the graph 1110 of the example 1101 in which the recess 320 is absent. This may be because the recess 320 has an effect on antenna performance. In particular, when referring to FIG. 11E, in the graphs 1130 and 1140 of the examples 1103 and 1104 in which the length of the recess 320 is relatively large, antenna efficiency may be improved, compared to the graphs 1110 and 1120 of the examples 1101 and 1102 in which the length of the recess 320 is relatively small.

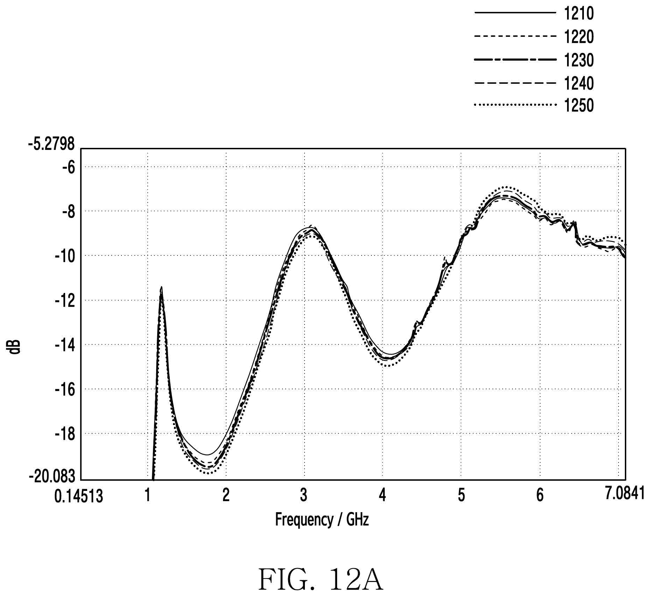

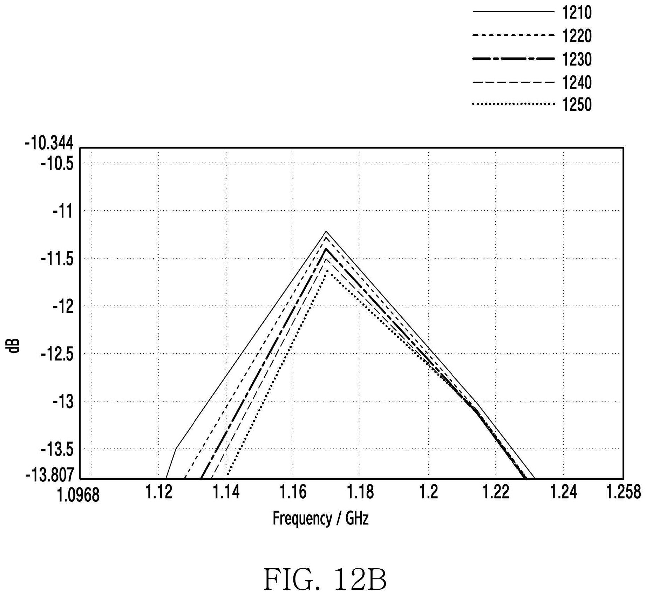

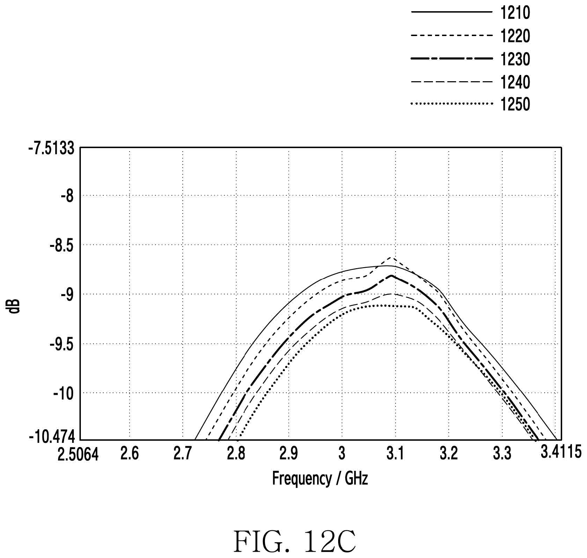

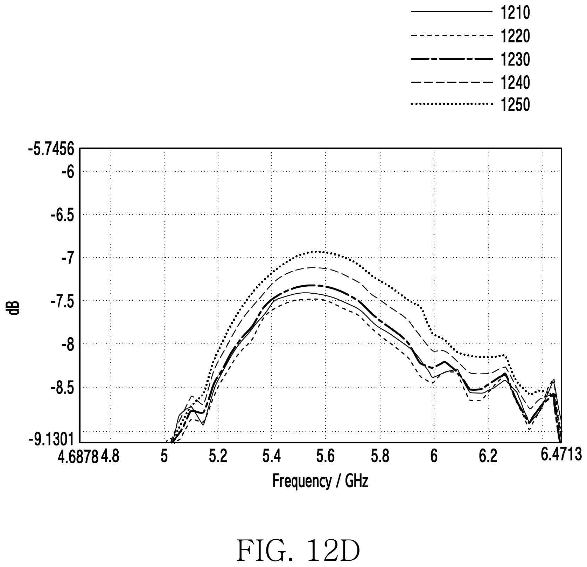

FIG. 12A, FIG. 12B, FIG. 12C, and FIG. 12D are graphs illustrating antenna efficiency (e.g., total efficiency) according to a length of a recess.

FIG. 12B is a graph obtained by enlarging a graph of a first frequency band of about 1.09 GHz to about 1.26 GHz of FIG. 12A. FIG. 12C is a graph obtained by enlarging a graph of a second frequency band of about 2.50 GHz to about 3.41 GHz of FIG. 12A. FIG. 12D is a graph obtained by enlarging a graph of a third frequency band of about 4.68 GHz to about 6.47 GHz of FIG. 12A.

Referring to FIG. 12A, FIG. 12B, FIG. 12C, and FIG. 12D, a graph 1210 may be a graph representing antenna efficiency when a recess 320 is absent, such as the example 1101 of FIG. 11A (e.g., the graph 1110 of FIG. 11B). A graph 1220 may be a graph representing antenna efficiency when a first length L1 of the recess 320 is 3.0 mm, such as the example 1102 of FIG. 11A (e.g., the graph 1120 of FIG. 11B). A graph 1230 may be a graph representing antenna efficiency when a length of the recess 320 is 7.0 mm. A graph 1240 may be a graph representing antenna efficiency when the length of the recess 320 is 10.0 mm. It may be a graph representing antenna efficiency when a second length L2 of the recess 320 is 15.0 mm (e.g., the graph 1130 of FIG. 11B).

Referring to FIG. 12B, FIG. 12C, and FIG. 12D, in the first frequency band and the second frequency band, antenna performance may tend to be reduced as the length of the recess 320 increases (i.e., from the graph 1210 to the graph 1250), and in the third frequency band, antenna efficiency may tend to be improved as the length of the recess 320 increases. As such, according to the length of the recess 320, antenna efficiency for each frequency band may be traded off. Accordingly, by varying the length of the recess 320, performance of the antenna may be appropriately adjusted.

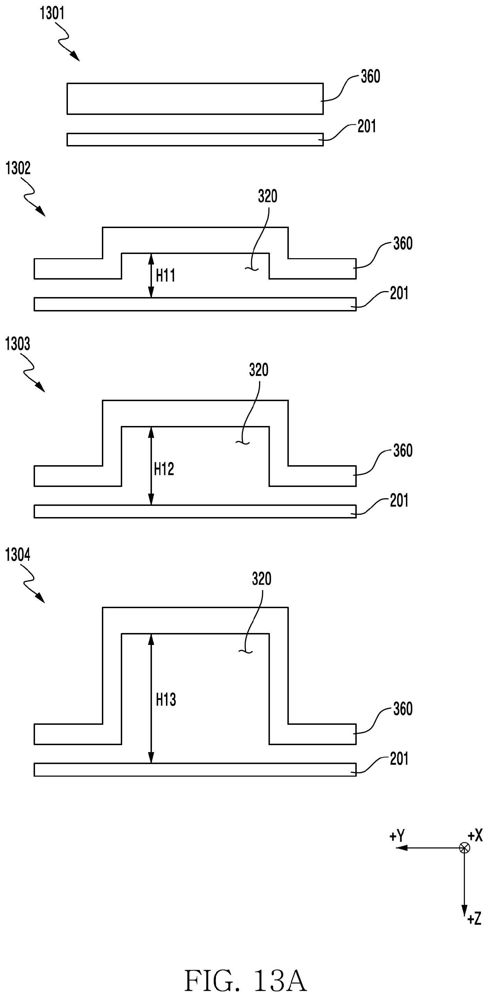

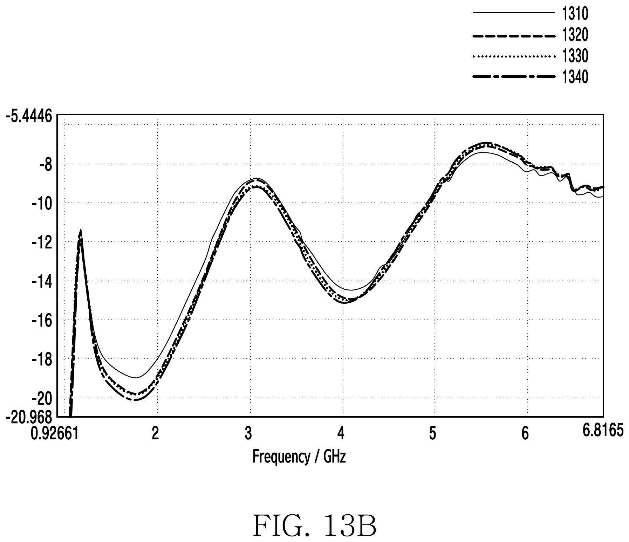

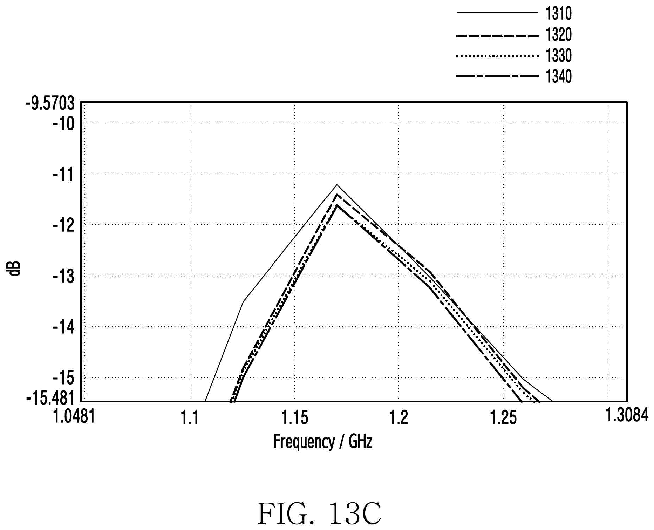

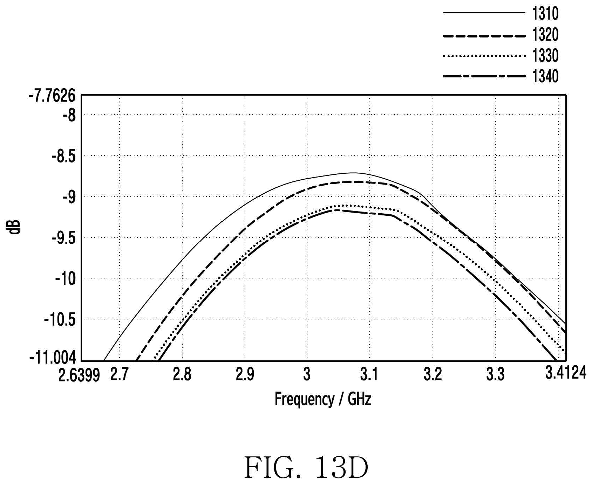

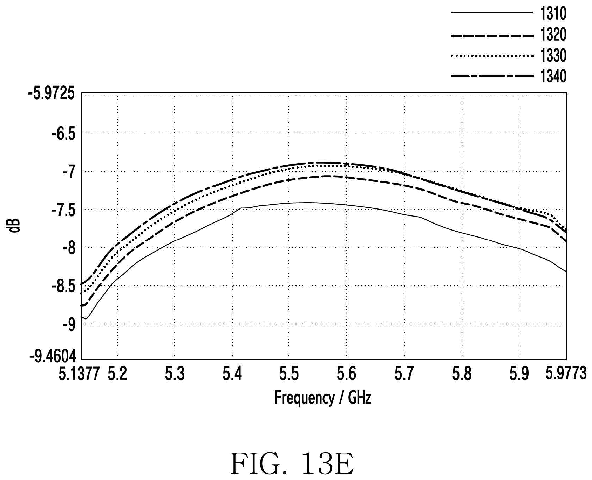

FIG. 13A illustrates examples of an electronic device having slots of various heights. FIG. 13B, FIG. 13C, FIG. 13D, and FIG. 13E are graphs illustrating antenna efficiency (e.g., total efficiency) according to the examples of FIG. 13A. FIG. 13C is a graph obtained by enlarging a graph of a first frequency band of about 1.05 GHz to about 1.30 GHz of FIG. 13B. FIG. 13D is a graph obtained by enlarging a graph of a second frequency band of about 2.64 GHz to about 3.41 GHz of FIG. 13B. FIG. 13E is a graph obtained by enlarging a graph of a third frequency band of about 5.14 GHz to about 5.97 GHz of FIG. 13B.

Referring to FIG. 13A, an example 1301 in which a recess 320 is not formed and examples 1302, 1303, and 1304 in which a second conductive portion 360 is spaced apart from a display 201 by various distances H11, H12, and H13 (e.g., the first distance H1 of FIG. 4A) through the recess 320 are illustrated. For example, the distances H11, H12, and H13 may be based on a Z-axis direction.

In an embodiment, the examples 1301, 1302, 1303, and 1304 may include a second conductive portion 360 and a display 201 below the second conductive portion 360. In the second conductive portion 360 of the example 1301, the recess 320 may not be formed. As the recess 320 is formed, the second conductive portion 360 of the example 1302 may be spaced apart by the first distance H11. As the recess 320 is formed, the second conductive portion 360 of the example 1303 may be spaced apart from the display 201 by the second distance H12 greater than the first distance H11. As the recess 320 is formed, the second conductive portion 360 of the example 1304 may be spaced apart from the display 201 by the third distance H13 greater than the second distance H12.

A graph 1310 of FIG. 13B, FIG. 13C, FIG. 13D, and FIG. 13E may illustrate antenna efficiency of the example 1301. A graph 1320 of FIG. 13B, FIG. 13C, FIG. 13D, and FIG. 13E may be antenna efficiency when the first distance H11 of the example 1302 is 0.5 mm. A graph 1330 of FIG. 13B, FIG. 13C, FIG. 13D, and FIG. 13E may be antenna efficiency when the second distance H12 of the example 1303 is 1.5 mm. A graph 1340 of FIG. 13B, FIG. 13C, FIG. 13D, and FIG. 13E may be antenna efficiency when the third distance H13 of the example 1304 is 2.0 mm.

Referring to FIG. 13B, FIG. 13C, and FIG. 13D, in the first frequency band and the second frequency band, antenna performance may tend to be reduced as a height of the recess 320 increases (i.e., from the graph 1310 to the graph 1340), and in the third frequency band, antenna efficiency may tend to be improved as the height of the recess 320 increases. As such, according to the height of the recess 320 and a distance between the second conductive portion 360 and the display 201, antenna efficiency for each frequency band may be traded off. Accordingly, by varying the height of the recess 320, performance of an antenna may be appropriately adjusted.

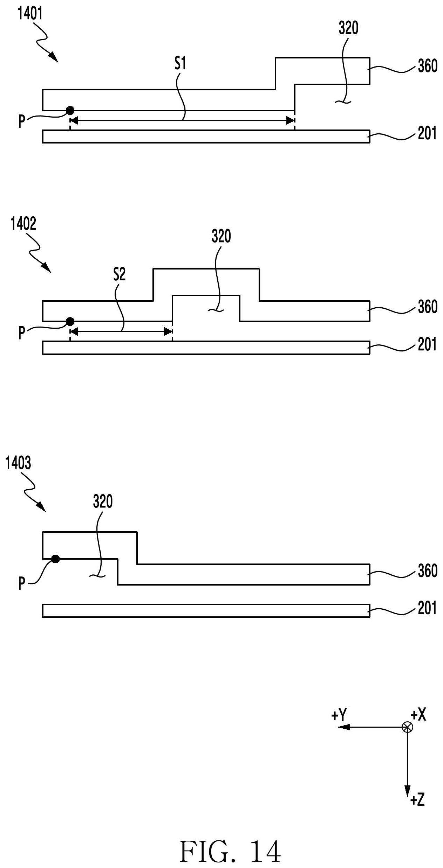

FIG. 14 illustrates examples of a position of a recess according to an embodiment. Examples 1401, 1402, and 1403 of FIG. 14 may be diagrams viewing a second conductive portion 360 in a +X direction from the outside of a recess 320.

Referring to the example 1401 of FIG. 14, in an embodiment, the recess 320 of the second conductive portion 360 may be positioned at a first distance S1 from a feeding point P. For example, the feeding point P of the example 1401 (e.g., the feeding point P1 of FIG. 3A) may be positioned at a point of the second conductive portion 360.

Referring to the example 1402, in an embodiment, the recess 320 of the second conductive portion 360 may be positioned at a second distance S2 from a feeding point P. For example, the second distance S2 may be less than the first distance S1. For example, the feeding point P of the example 1402 (e.g., the feeding point P2 of FIG. 3A) may be positioned at a point of the second conductive portion 360.

Referring to the example 1403, in an embodiment, the recess 320 of the second conductive portion 360 may be positioned at a third distance from a feeding point P. The third distance may be less than the first distance S1 and the second distance S2. For example, the feeding point P of the example 1403 (e.g., the feeding point P3 of FIG. 3A) may be positioned at a point of a part (e.g., a recess portion) of the second conductive portion 360 forming the recess 320. Additionally or alternatively, although not illustrated, the feeding point P may be positioned in a first conductive portion (e.g., the first conductive portion 350 of FIG. 3A) positioned on an opposite side of the recess 320.

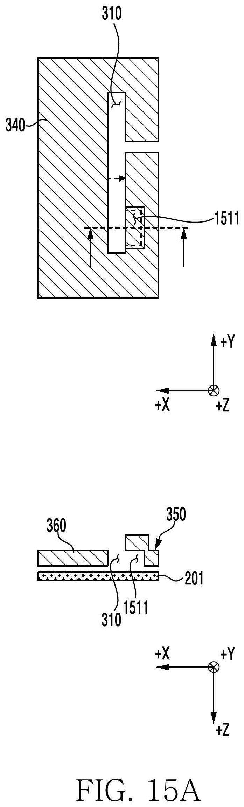

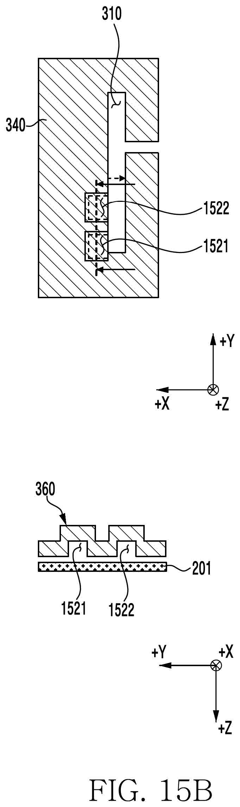

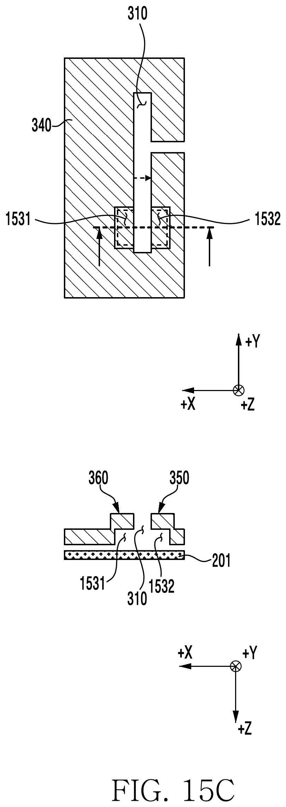

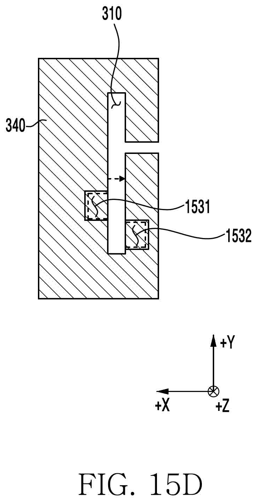

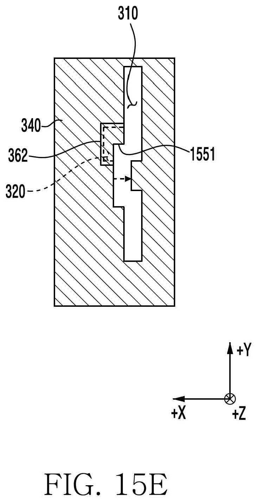

FIG. 15A, FIG. 15B, FIG. 15C, FIG. 15D, and FIG. 15E illustrate various examples of a frame structure of an electronic device in which a recess and a slot are formed, according to an embodiment. A dotted arrow illustrated in FIG. 15A, FIG. 15B, FIG. 15C, FIG. 15D, and FIG. 15E may be a feeding line connected to a point of a frame structure 340 corresponding to an edge of a slot (or a slit) 310, but a position of the feeding line is not limited by the illustrated example.

Referring to FIG. 15A, a recess 1511 may be formed in the frame structure 340. Unlike the above-described recess 320 being formed in a second conductive portion 360, in an embodiment, the recess 1511 may be formed only in a first conductive portion 350. The recess 320 may be formed only in the first conductive portion 350, may be formed only in the second conductive portion 360, or may be formed to extend inward from the first conductive portion 350 toward the second conductive portion 360 (e.g., may be formed in both the first conductive portion 350 and the second conductive portion 360).

Referring to FIG. 15B, in an embodiment, a first recess 1521 and a second recess 1522 spaced apart from the first recess 1521 may be formed in the frame structure 340. The first recess 1521 and the second recess 1522 may be formed in the second conductive portion 360, respectively. Each of the first recess 1521 and the second recess 1522 may be an example of the recess 320.

Referring to FIG. 15C, in an embodiment, a first recess 1531 (e.g., the above-described recess 320) and a second recess 1532 (e.g., the recess 1511) may be formed in the frame structure 340. For example, the first recess 1531 may be formed in the second conductive portion 360, and the second recess 1532 may be formed in the first conductive portion 350. For example, the first recess 1531 and the second recess 1532 may face each other with the slot 310 therebetween.

Referring to FIG. 15D, unlike the first recess 1531 and the second recess 1532 of FIG. 15C being positioned to face each other, the first recess 1531 and the second recess 1532 may be positioned to be at least partially misaligned with each other.

Referring to FIG. 15E, unlike a second part 362 of the second conductive portion 360 defining the above-described recesses forming an edge of the slot 310 extending substantially straight, in an embodiment, the second part 362 defining the recess 320 may be formed at a bent edge 1551 of the slot 310. For example, an end portion in which the second part 362 is open to the slot 310 may have a bent shape (e.g., a stepped shape).

According to an embodiment, an electronic device (e.g., the electronic device 200 of FIG. 2A) may include a display (e.g., the display 201 of FIG. 2B), a rear cover (e.g., the rear plate 211 of FIG. 2B), a side member (e.g., the first part 241 of FIG. 2B) including a first conductive portion (e.g., the first conductive portion 350 of FIG. 3A) forming a part of a side surface (e.g., the third surface 200C of FIG. 2A) of the electronic device, and a support member (e.g., the second part 243 of FIG. 2B) disposed between the display and the rear cover and including a planar portion (e.g., the first part 361 of FIG. 3A) and a recess portion (e.g., the second part 362 of FIG. 3A). The recess portion may include a second conductive portion recessed toward the rear cover relative to the planar portion and extending toward the side surface. The second conductive portion of the recess portion may be configured to form, together with the first conductive portion, a slot region (e.g., the slot 310 of FIG. 3A) substantially facing the display. The electronic device may include a communication circuit (e.g., the wireless communication module 192 of FIG. 1) configured to transmit or receive a wireless signal through the slot region.

In an embodiment, the first conductive portion may include a feeding part (e.g., the contact part 391 of FIG. 3A) electrically connected to the communication circuit, and may be configured such that, based on a current supplied through the feeding part by the communication circuit, a beam corresponding to the wireless signal is radiated to substantially face at least the rear cover.

In an embodiment, a first vertical distance (e.g., the first distance H1 of FIG. 4A) between the second conductive portion of the recess portion and the display may be greater than a second vertical distance (e.g., the second distance H2 of FIG. 4A) between the planar portion and the display.

In an embodiment, the side member may include a third conductive portion (e.g., the first segment 351 of FIG. 3A) spaced apart from the first conductive portion, and a slit (e.g., the slit 315 of FIG. 3A) formed between the first conductive portion and the third conductive portion. The slot region may be formed to be continuously connected to the slit.

In an embodiment, the slot region may be substantially filled with a non-conductive material.

In an embodiment, an internal space (e.g., the recess 320 of FIG. 3D) formed by the recess portion may be substantially filled with a non-conductive material.

In an embodiment, a height of the internal space formed by the recess portion may be 1.5 millimeters or more.

In an embodiment, the electronic device may include a printed circuit board (e.g., the printed circuit board 650 of FIG. 6A) disposed on the support member. The communication circuit may be disposed on the printed circuit board. The printed circuit board may be disposed not to overlap the slot region when viewed in a direction substantially perpendicular to the display.

In an embodiment, the wireless signal may have a high-frequency band of 2 GHz or more.

In an embodiment, the electronic device may further include a shielding member disposed between the display and the support member and disposed to substantially overlap the planar portion and the recess portion when viewed in a direction substantially perpendicular to the display.

In an embodiment, the recess portion may include a first recess portion and a second recess portion. The first recess portion and the second recess portion may be formed not to overlap each other when viewed in a direction substantially perpendicular to the display.

In an embodiment, the second conductive portion may include a planar side portion and a recess side portion recessed in a direction away from the side member relative to the planar side portion.

In an embodiment, the first conductive portion may include a protruding portion protruding toward the recess side portion.

In an embodiment, the slot region may be formed to be continuously connected to a cut region formed in the planar portion.

According to an embodiment, an electronic device (e.g., the electronic device 200 of FIG. 2A) may include a display (e.g., the display 201 of FIG. 2B) and a conductive support member (e.g., the frame structure 340 of FIG. 3A) supporting the display. The conductive support member may include a sidewall portion (e.g., the first conductive portion 350 of FIG. 3A) adjacent to a side surface (e.g., the third surface 200C of FIG. 2A) of the electronic device, a planar portion (e.g., the first part 361 of FIG. 3A), and a recess portion (e.g., the second part 362 of FIG. 3A). The recess portion may be configured to form, together with the sidewall portion, a slot region (e.g., the slot 310 of FIG. 3A) substantially facing the display by being recessed toward a rear surface (e.g., the second surface 200B of FIG. 2A) of the electronic device relative to the planar portion and extend toward the side surface of the electronic device. The electronic device may include a communication circuit (e.g., the wireless communication module 192 of FIG. 1) configured to transmit and receive a wireless signal through the slot region.

In an embodiment, the sidewall portion may include a feeding part (e.g., the contact part 391 of FIG. 3A) electrically connected to the communication circuit, and may be configured such that, based on a current supplied through the feeding part by the communication circuit, a beam corresponding to the wireless signal is radiated to substantially face at least a direction substantially perpendicular to the display.

In an embodiment, the sidewall portion may further include another recess portion recessed toward the rear surface of the electronic device.

In an embodiment, the another recess portion may be disposed to at least partially overlap the recess portion when viewed in a direction substantially parallel to the display.

According to an embodiment, an electronic device (e.g., the electronic device 200 of FIG. 2A) may comprise a display (e.g., the display 201 of FIG. 2B) visible through a front surface (e.g., the first surface 200A of FIG. 2A) of the electronic device, a housing (e.g., the housing 210 of FIG. 2A) comprising a first conductive portion (e.g., the first conductive portion 350 of FIG. 3A) forming a part of a side surface (e.g., the third surface 200C of FIG. 2A) of the electronic device and a second conductive portion (e.g., the second conductive portion 360 of FIG. 3A) positioned below the display and at least partially separated from the first conductive portion by a slot (e.g., the slot 310 of FIG. 3A), and a wireless communication circuit (e.g., the wireless communication module 192 of FIG. 1) configured to transmit and receive a radio frequency (RF) signal through the slot. The second conductive portion may comprise a first part (e.g., the first part 361 of FIG. 3A) and a second part (e.g., the second part 362 of FIG. 3A) forming a part of an edge of the slot. The second part of the second conductive portion may define a recess (e.g., the recess 320 of FIG. 3D) that is open toward the first conductive portion to be connected to the slot and is recessed toward a rear surface (e.g., the second surface 200B of FIG. 2A) of the electronic device such that the second part is spaced further from the display than the first part.

In an embodiment, a first distance (e.g., the first distance H1 of FIG. 4A) between a bottom surface of the recess defined by the second part and a back surface of the display may be greater than a second distance (e.g., the second distance H2 of FIG. 4A) between a surface of the first part facing the display and the back surface of the display.

In an embodiment, the side surface of the electronic device may comprise a first region (e.g., the first region 341 of FIG. 3A), a second region (e.g., the second region 342 of FIG. 3A), and a third region (e.g., the third region 343 of FIG. 3A) between the first region and the second region. The first conductive portion may comprise a first segment (e.g., the first segment 351 of FIG. 3A) forming the first region of the side surface and a second segment (e.g., the second segment 352 of FIG. 3A) forming the second region of the side surface. The first conductive portion may define a slit (e.g., the slit 315 of FIG. 3A) extending from the third region of the side surface to the slot.

In an embodiment, the housing may comprise a first non-conductive portion at least partially disposed within the slit and forming the third region of the side surface.

In an embodiment, the housing may comprise a second non-conductive portion at least partially disposed within the slot.

In an embodiment, the housing may comprise a third non-conductive portion at least partially disposed within the recess of the second part.

In an embodiment, the housing may comprise a first non-conductive portion at least partially disposed within the slit and forming the third region of the side surface, a second non-conductive portion at least partially disposed within the slot, and a third non-conductive portion at least partially disposed within the recess of the second part. The first non-conductive portion, the second non-conductive portion, and the third non-conductive portion may be integrally formed.

In an embodiment, the first conductive portion may comprise a feeding part (e.g., the contact part 391 of FIG. 3A) electrically connected to the wireless communication circuit.

In an embodiment, the feeding part may protrude toward the second conductive portion.

In an embodiment, a depth of the recess based on a direction perpendicular to the display may be 1.5 mm or more and 3.0 mm or less.

In an embodiment, the electronic device may comprise a printed circuit board (e.g., the printed circuit board 650 of FIG. 6A) on which the wireless communication circuit is disposed. The printed circuit board may not overlap the slot when viewed in a direction substantially perpendicular to the display.

In an embodiment, the housing may comprise a support portion (e.g., the second support portion 664 of FIG. 6C) comprising a first surface (e.g., the front surface 340A of FIG. 3A) facing the display and a second surface (e.g., the rear surface 340B of FIG. 3A) opposite to the first surface and formed to be substantially flat. The printed circuit board may be disposed on the second surface of the support portion. The second part may extend to protrude from the support portion toward the rear surface of the electronic device. A part of a side surface of the printed circuit board may face the second part.

In an embodiment, the electronic device may comprise a flexible printed circuit board (e.g., the connection member 655 of FIG. 6A) extending from a region on the printed circuit board to a region on the first conductive portion adjacent to the slot. The wireless communication circuit may be electrically connected to the first conductive portion through the flexible printed circuit board.

In an embodiment, the recess may be a first recess (e.g., the first recess 1521 of FIG. 15B). The second conductive portion may comprise a third part forming another part of the edge of the slot. The third part may define a second recess (e.g., the second recess 1522 of FIG. 15B) that is open toward the first conductive portion to be connected to the slot and is recessed toward the rear surface of the electronic device such that the third part is spaced further from the display than the first part.

In an embodiment, the first conductive portion may define a third recess (e.g., the second recess 1532 of FIG. 15C) that is open toward the second conductive portion to be connected to the slot and is recessed toward the rear surface of the electronic device.

In an embodiment, the first recess and the third recess may be positioned adjacent to each other with the slot therebetween.

In an embodiment, an edge section (e.g., the edge 1551 of FIG. 15E) of the slot formed by the second part may have a stepped shape when viewed in a direction substantially perpendicular to the display.

The electronic device according to various embodiments may be one of various types of electronic devices. The electronic devices may include, for example, a portable communication device (e.g., a smartphone), a computer device, a portable multimedia device, a portable medical device, a camera, a wearable device, or a home appliance. According to an embodiment of the disclosure, the electronic devices are not limited to those described above.

It should be appreciated that various embodiments of the present disclosure and the terms used therein are not intended to limit the technological features set forth herein to particular embodiments and include various changes, equivalents, or replacements for a corresponding embodiment. With regard to the description of the drawings, similar reference numerals may be used to refer to similar or related elements. It is to be understood that a singular form of a noun corresponding to an item may include one or more of the things unless the relevant context clearly indicates otherwise. As used herein, each of such phrases as "A or B," "at least one of A and B," "at least one of A or B," "A, B, or C," "at least one of A, B, and C," and "at least one of A, B, or C," may include any one of or all possible combinations of the items enumerated together in a corresponding one of the phrases. As used herein, such terms as "1st" and "2nd," or "first" and "second" may be used to simply distinguish a corresponding component from another, and does not limit the components in other aspect (e.g., importance or order). It is to be understood that if an element (e.g., a first element) is referred to, with or without the term "operatively" or "communicatively", as "coupled with," or "connected with" another element (e.g., a second element), it means that the element may be coupled with the other element directly (e.g., wiredly), wirelessly, or via a third element.

As used in connection with various embodiments of the disclosure, the term "module" may include a unit implemented in hardware, software, or firmware, and may interchangeably be used with other terms, for example, "logic," "logic block," "part," or "circuitry". A module may be a single integral component, or a minimum unit or part thereof, adapted to perform one or more functions. For example, according to an embodiment, the module may be implemented in a form of an application-specific integrated circuit (ASIC).

Various embodiments as set forth herein may be implemented as software (e.g., the program 140) including one or more instructions that are stored in a storage medium (e.g., internal memory 136 or external memory 138) that is readable by a machine (e.g., the electronic device 101). For example, a processor (e.g., the processor 120) of the machine (e.g., the electronic device 101) may invoke at least one of the one or more instructions stored in the storage medium, and execute it, with or without using one or more other components under the control of the processor. This allows the machine to be operated to perform at least one function according to the at least one instruction invoked. The one or more instructions may include a code generated by a compiler or a code executable by an interpreter. The machine-readable storage medium may be provided in the form of a non-transitory storage medium. Wherein, the term "non-transitory" simply means that the storage medium is a tangible device, and does not include a signal (e.g., an electromagnetic wave), but this term does not differentiate between a case in which data is semi-permanently stored in the storage medium and a case in which the data is temporarily stored in the storage medium.

According to an embodiment, a method according to various embodiments of the disclosure may be included and provided in a computer program product. The computer program product may be traded as a product between a seller and a buyer. The computer program product may be distributed in the form of a machine-readable storage medium (e.g., compact disc read only memory (CD-ROM)), or be distributed (e.g., downloaded or uploaded) online via an application store (e.g., PlayStore^{™}), or between two user devices (e.g., smart phones) directly. If distributed online, at least part of the computer program product may be temporarily generated or at least temporarily stored in the machine-readable storage medium, such as memory of the manufacturer's server, a server of the application store, or a relay server.

According to various embodiments, each component (e.g., a module or a program) of the above-described components may include a single entity or multiple entities, and some of the multiple entities may be separately disposed in different components. According to various embodiments, one or more of the above-described components may be omitted, or one or more other components may be added. Alternatively or additionally, a plurality of components (e.g., modules or programs) may be integrated into a single component. In such a case, according to various embodiments, the integrated component may still perform one or more functions of each of the plurality of components in the same or similar manner as they are performed by a corresponding one of the plurality of components before the integration. According to various embodiments, operations performed by the module, the program, or another component may be carried out sequentially, in parallel, repeatedly, or heuristically, or one or more of the operations may be executed in a different order or omitted, or one or more other operations may be added.

## Claims

1. An electronic device comprising:
a display visible through a front surface of the electronic device;
a housing comprising a first conductive portion forming a part of a side surface of the electronic device and a second conductive portion positioned below the display and at least partially separated from the first conductive portion by a slot; and
a wireless communication circuit configured to transmit and receive a radio frequency (RF) signal through the slot,
wherein the second conductive portion comprises a first part and a second part forming a part of an edge of the slot, and
wherein the second part of the second conductive portion defines a recess that is open toward the first conductive portion to be connected to the slot and is recessed toward a rear surface of the electronic device such that the second part is spaced further from the display than the first part.

2. The electronic device of claim 1, wherein a first distance between a bottom surface of the recess defined by the second part and a back surface of the display is greater than a second distance between a surface of the first part facing the display and the back surface of the display.

3. The electronic device of claim 1 or 2, wherein the side surface of the electronic device comprises a first region, a second region, and a third region between the first region and the second region,
wherein the first conductive portion comprises a first segment forming the first region of the side surface and a second segment forming the second region of the side surface, and
wherein the first conductive portion defines a slit extending from the third region of the side surface to the slot.

4. The electronic device of claim 3, wherein the housing comprises a first non-conductive portion at least partially disposed within the slit and forming the third region of the side surface.

5. The electronic device of any one of claims 1 to 4, wherein the housing comprises a second non-conductive portion at least partially disposed within the slot.

6. The electronic device of any one of claims 1 to 5, wherein the housing comprises a third non-conductive portion at least partially disposed within the recess of the second part.

7. The electronic device of claim 1 or 2, wherein the side surface of the electronic device comprises a first region, a second region, and a third region between the first region and the second region,
wherein the first conductive portion comprises a first segment forming the first region of the side surface and a second segment forming the second region of the side surface,
wherein the first conductive portion defines a slit extending from the third region of the side surface to the slot,
wherein the housing comprises:
a first non-conductive portion at least partially disposed within the slit and forming the third region of the side surface;
a second non-conductive portion at least partially disposed within the slot; and
a third non-conductive portion at least partially disposed within the recess of the second part, and
wherein the first non-conductive portion, the second non-conductive portion, and the third non-conductive portion are integrally formed.

8. The electronic device of any one of claims 1 to 7, wherein the first conductive portion comprises a feeding part electrically connected to the wireless communication circuit.

9. The electronic device of claim 8, wherein the feeding part protrudes toward the second conductive portion.

10. The electronic device of any one of claims 1 to 9, wherein a depth of the recess based on a direction perpendicular to the display is 1.5 mm or more and 3.0 mm or less.

11. The electronic device of any one of claims 1 to 10, comprising a printed circuit board on which the wireless communication circuit is disposed,
wherein the printed circuit board does not overlap the slot when viewed in a direction substantially perpendicular to the display.

12. The electronic device of claim 11, wherein the housing comprises a support portion comprising a first surface facing the display and a second surface opposite to the first surface and formed to be substantially flat,
wherein the printed circuit board is disposed on the second surface of the support portion,
wherein the second part extends to protrude from the support portion toward the rear surface of the electronic device, and
wherein a part of a side surface of the printed circuit board faces the second part.

13. The electronic device of claim 11 or 12, comprising a flexible printed circuit board extending from a region on the printed circuit board to a region on the first conductive portion adjacent to the slot,
wherein the wireless communication circuit is electrically connected to the first conductive portion through the flexible printed circuit board.

14. The electronic device of any one of claims 1 to 13, wherein the recess is a first recess,
wherein the second conductive portion comprises a third part forming another part of the edge of the slot, and
wherein the third part defines a second recess that is open toward the first conductive portion to be connected to the slot and is recessed toward the rear surface of the electronic device such that the third part is spaced further from the display than the first part.

15. The electronic device of any one of claims 1 to 14, wherein the first conductive portion defines a third recess that is open toward the second conductive portion to be connected to the slot and is recessed toward the rear surface of the electronic device.
